# EUROPÄISCHE PATENTSCHRIFT

(11) **EP 4 392 630 B1**
(45) Veröffentlichungstag und Bekanntmachung des Hinweises auf die Patenterteilung: **29.10.2025**
(21) Anmeldenummer: 22792771.2
(22) Anmeldetag: 12.08.2022
(51) Int. Cl.: E04G 1/15, E04G 7/30, E04G 7/32, E04G 7/34, E04G 1/12, F16B 7/04

(54) **GERÜSTRIEGEL**
SCAFFOLD LEDGER
BARRE D'ÉCHAFAUDAGE

(30) Priorität: 27.08.2021 DE 102021122295
(43) Veröffentlichungstag der Anmeldung: 03.07.2024
(73) Patentinhaber: PERI SE, 89264 Weißenhorn (DE)
(72) Erfinder: STECK, Tobias, 89264 Weißenhorn (DE)
(74) Vertreter: Wildschütte, Matthias Bernd
(86) Internationale Anmeldenummer: PCT/EP2022/072652
(87) Internationale Veröffentlichungsnummer: WO 2023/025603

(56) Entgegenhaltungen:
- WO-A1-2012/014581
- DE-A1- 2 237 490
- JP-A- 2013 194 461
- JP-A- H0 593 461
- US-A- 3 672 710

## Beschreibung

Die Erfindung betrifft einen Gerüstriegel insbesondere zum horizontal orientierten Einbau in einen Gerüstabschnitt, umfassend zumindest einen Riegelträger, welcher stabförmig ausgeführt ist und sich in Richtung einer Längsachse erstreckt, wobei der Riegelträger in Richtung der Längsachse zwei einander gegenüberliegende Enden aufweist und an jedem dieser beiden Enden eine Verbindungsschnittstelle angeordnet ist, welche zur Verbindung mit einem Gerüstelement vorgesehen ist, zumindest zwei Ausleger, welche sich jeweils entlang einer Auslegerachse erstrecken, wobei die Ausleger jeweils in Richtung ihrer Auslegerachse zwei einander gegenüberliegende Enden aufweisen, wobei eines dieser Enden jedes Auslegers mit dem Riegelträger verbunden ist und zumindest zwei Verschlüsse, von denen jeweils einer an dem Ende eines Auslegers angeordnet, welches der Verbindung dieses Auslegers mit dem Riegelträger gegenüberliegt. Die Erfindung betrifft weiterhin einen Gerüstabschnitt mit einem Gerüstriegel, sowie ein Verfahren zum Aufbau eines solchen Gerüstabschnittes.

Gerüste werden im Baubereich für verschiedene Aufgaben eingesetzt. Fassadengerüste dienen dazu, die Außenflächen von Gebäuden zu gestalten, beispielsweise zu streichen. Fassadengerüste werden in der Regel aus Fassaden-Gerüstrahmen als Hauptkomponenten aufgebaut, in neuerer Zeit werden diese auch aus Modulgerüsten aufgebaut. Im Ingenieurbau werden Traggerüste dafür eingesetzt, verschiedenste Bauwerksteile in Position zu bringen und dort zu halten. Solche Bauwerksteile können beispielsweise Beton-Fertigteile, Stahlträger oder Stahlstrukturen sein. Weiterhin können zur Errichtung von Bauwerken benötigte Elemente wie Behelfskonstruktionen oder Schalungen mit Traggerüsten positioniert werden. Schließlich kommen Gerüste auch im Service- oder Revisionsbereich zum Einsatz, beispielsweise um Arbeitskräfte bei großen verfahrenstechnischen Anlagen, wie Raffinerien, sicher zu den zu überholenden Anlagenteilen zu bringen. Generell bestehen für Gerüste die Grundanforderungen, dass sie leicht zu transportieren und einfach aufzubauen sein müssen.

Eine Vielzahl von Gerüsten ist modular aufgebaut, das bedeutet, dass verschiedene Formen und Größen von Gerüsten aus Standardbauteilen nach dem Baukastenprinzip zusammengesetzt werden können. Meist existieren Standardbauteile, welche hauptsächlich beim Aufbau eines Gerüstes vertikal orientiert zum Einsatz kommen und andere Standardbauteile, welche hauptsächlich horizontal orientiert verwendet werden. Vertikal orientierte Standardbauteile werden meist als Vertikalstiele oder Gerüststiele bezeichnet. Die damit verbindbaren horizontal orientierten Bauteile werden oft als Horizontalriegel oder Gerüstriegel bezeichnet. Beim Aufbau eines Gerüstes oder Gerüstabschnittes werden mehrere Gerüststiele parallel zueinander orientiert und anschließend mit mehreren, rechtwinklig dazu orientierten Horizontalriegeln verbunden. Die Verbindung der Gerüstelemente erfolgt über Schnittstellen. Auf diese Weise lassen sich Gerüste oder Gerüstabschnitte mit mehreren Etagen in einfacher Weise aufbauen.

Es gibt Anwendungsfälle, in denen ein Gerüstabschnitt oder eine Gerüstetage stärker als gewöhnlich belastet wird. Dies kann beispielsweise bei einem in einem Gerüst unten angeordneten Gerüstabschnitt der Fall sein, auf denen viele weitere Etagen oberhalb angeordnet werden. Eine höhere Belastung kann auch auftreten, wenn das Gerüst oder der Gerüstabschnitt Bauwerksteile oder sonstige Komponenten von hohem Gewicht halten und positionieren sollen. Bei solch höherer Belastung werden die Gerüstabschnitte insbesondere stärker auf Biegung belastet. Bei bekannten Modulgerüsten besteht in solchen Fällen die Möglichkeit, zusätzliche Standardkomponenten als Verstrebungen einzubauen, um höhere Biegelasten zu kompensieren. Dies wird üblicherweise durch den Einbau mehrerer parallel zueinander verlaufender Gerüstriegel in horizontaler Richtung zwischen vertikal orientierten Gerüstelementen erreicht. Problematisch bei dieser Lösung ist, dass die Anzahl der Verbindungsschnittstellen zum Einbau zusätzlicher Streben an den Gerüstelementen, welche in vertikaler Richtung orientiert sind, begrenzt ist. Es ist somit nicht immer möglich, die Tragfähigkeit eines Gerüstabschnittes durch den weiteren Einbau zusätzlicher horizontal orientierter Gerüstelemente zu erhöhen, da in manchen Fällen keine freien Verbindungsschnittstellen zum Einbau zusätzlicher Gerüstelemente vorhanden sind. In so einem Fall kann eine erhöhte Tragfähigkeit lediglich dadurch erreicht werden, dass ein anderes, tragfähigeres Gerüstsystem verwendet wird, was mit erhöhtem Aufwand und höheren Kosten verbunden ist.

JP H05 93461 A beschreibt ein Verbindungselement für ein Rahmengerüst. Das Verbindungselement umfasst zwei horizontal orientierte, parallel zueinander angeordnete Träger, welche durch zwei diagonal angeordnete Streben miteinander verbunden sind. Das Verbindungselement weist insgesamt vier Verbindungsschnittstellen auf, mit denen es mit anderen Gerüstelementen verbunden werden kann. Diese Verbindungsschnittstellen weisen Schraubgewinde auf, welche besonders resistent gegen Vibrationen am Rahmngerüst sind und eine sichere Verbindung mit anderen Gerüstelementen sicherstellen sollen.

Die Aufgabe der Erfindung besteht somit darin, Lösungen vorzuschlagen mit denen die Tragfähigkeit, insbesondere die Biegefestigkeit, eines modular aufgebauten Gerüstes erhöht werden kann, wobei die Anzahl der benötigten Gerüstelemente gleich bleiben soll.

Diese Aufgabe der Erfindung wird gelöst durch einen Gerüstriegel, insbesondere zum horizontal orientierten Einbau in einen Gerüstabschnitt, umfassend
- zumindest einen Riegelträger, welcher stabförmig ausgeführt ist und sich in Richtung einer Längsachse erstreckt, wobei der Riegelträger in Richtung der Längsachse zwei einander gegenüberliegende Enden aufweist und an jedem dieser beiden Enden eine Verbindungsschnittstelle angeordnet ist, welche zur Verbindung mit einem Gerüstelement vorgesehen ist,
- zumindest zwei Ausleger, welche sich jeweils entlang einer Auslegerachse erstrecken, wobei die Auslegerachsen jeweils in einem Winkel zwischen 1° und 89° zur Längsachse orientiert sind und wobei die Ausleger jeweils in Richtung ihrer Auslegerachse zwei einander gegenüberliegende Enden aufweisen, wobei eines dieser Enden jedes Auslegers mit dem Riegelträger verbunden ist,
- zumindest zwei Verschlüsse, von denen jeweils einer an dem Ende eines Auslegers angeordnet ist, welches der Verbindung dieses Auslegers mit dem Riegelträger gegenüberliegt,

wobei jeder Verschluss ein fest mit dem Ausleger verbundenes Gehäuse aufweist und jeder Verschluss weiterhin ein zu dem Gehäuse beweglich gelagertes Verbindungselement aufweist,
wobei das Verbindungselement zumindest einen Haltebereich und einen Führungsbereich aufweist, wobei der Haltebereich und der Führungsbereich in der Richtung einer Verschlussachse nebeneinander und aneinander angrenzend angeordnet sind, wobei der Haltebereich einen Kopf und einen Schaft aufweisen, welche in der Richtung der Verschlussachse nebeneinander und aneinander angrenzend angeordnet sind und der Kopf zumindest bereichsweise in radialer Richtung zur Verschlussachse über den Schaft vorsteht, wobei der Kopf zur Herstellung einer formschlüssigen Verbindung mit einem Gerüstelement vorgesehen ist und
wobei jeder Verschluss zumindest ein Spannelement aufweist, welches mit dem Gehäuse und dem Verbindungselement beweglich, insbesondere formschlüssig, verbunden ist, wobei eine Bewegung des Spannelementes relativ zum Gehäuse das Verbindungselement in Richtung der Verschlussachse relativ zum Gehäuse bewegt, wobei die zwei Verbindungsschnittstellen des zumindest einen Riegelträgers und die zwei Verschlüsse zusammen zumindest vier Verbindungsstellen zur Verbindung des Gerüstriegels mit weiteren Gerüstelementen bereitstellen und sich die Verbindungsschnittstellen in Form und Größe von den Verschlüssen unterscheiden.

Ein erfindungsgemäßer Gerüstriegel umfasst insgesamt vier Verbindungsstellen, mit denen er mit anderen Gerüstelementen verbunden werden kann. Diese vier Verbindungsstellen sind zueinander beabstandet angeordnet. Dadurch ist der erfindungsgemäße Gerüstriegel dazu geeignet, größere Kräfte und Momente, welche in einem Gerüstabschnitt wirken, aufzunehmen als bekannte Horizontalriegel. Der erfindungsgemäße Gerüstriegel umfasst einen bevorzugt horizontal eingebauten Riegelträger, welcher stabförmig ausgeführt ist. Darunter ist zu verstehen, dass die Länge des Riegelträgers deutlich größer ist als dessen Breite und Dicke. Der Riegelträger erstreckt sich entlang einer Längsachse und weist an gegenüberliegenden Enden jeweils eine Verbindungsschnittstelle auf. Der Riegelträger mit den beiden Verbindungsschnittstellen entspricht im Wesentlichen einem bekannten Horizontalriegel. Die Verbindungsschnittstellen sind zur Verbindung mit einem Gerüstelement, bevorzugt einem Vertikalstiel, vorgesehen und so geformt und dimensioniert, dass sie mit entsprechenden Schnittstellen am Gerüstelement form- und kraftschlüssig verbunden werden können. Die Verbindungsschnittstellen sind so ausgeführt, dass sie kompatibel zu Verbindungsschnittstellen bekannter Horizontalriegel sind. Dadurch kann der erfindungsgemäße Gerüstriegel in einfacher Weise in ein bestehendes Gerüstsystem integriert werden. Zur Erhöhung der Tragfähigkeit, insbesondere bei der Ableitung von Kräften und Momenten sind an dem Riegelträger zumindest zwei Ausleger angebracht, an denen jeweils ein Verschluss angeordnet ist. Die beiden Verschlüsse dienen ebenfalls als Verbindungsstelle zu einem Gerüstelement und unterscheiden sich in Form, Größe und Funktionsweise von den Verbindungsschnittstellen am Riegelträger. Jeder der Ausleger erstreckt sich entlang einer Auslegerachse, wobei jede Auslegerachse in einem Winkel zwischen 1° und 89° zur Längsachse des Riegelträger orientiert ist. Das bedeutet, dass sich die beiden Ausleger in einem spitzen Winkel relativ zum Riegelträger erstrecken. Jeder Ausleger weist zwei gegenüberliegende Enden auf, von denen eines fest mit dem Riegelträger und das andere Fest mit einem Verschluss verbunden ist. Durch die Ausleger, werden die beiden Verschlüsse beabstandet zum Riegelträger und dessen Längsachse positioniert. Bevorzugt wird der Riegelträger mit einer Verbindungsschnittstelle und einem Verschluss an einem Gerüstelement befestigt. Dadurch, dass die Verbindungsschnittstellen und der Verschluss beabstandet angeordnet sind, kann diese Verbindung über zwei Verbindungsstellen Kräfte und Momente in sicherer Weise übertragen. Jeder Verschluss umfasst ein Gehäuse, welches fest und unbeweglich mit einem Ausleger verbunden ist. Im Inneren jedes Gehäuses ist ein Verbindungselement beweglich zum Gehäuse gelagert. Weiterhin umfasst jeder Verschluss ein Spannelement, welches ebenfalls beweglich bereichsweise in das Gehäuse und in das Verbindungselement eingebracht ist. Das Spannelement dient der Betätigung des Verschlusses. Wird das Spannelement bewegt, beispielsweise in einer linearen und/oder rotatorischen Bewegung, wird diese Bewegung in eine Bewegung des Verbindungselementes relativ zum feststehenden Gehäuse übersetzt. Diese Bewegung des Verbindungselementes kann dazu genutzt werden, eine Verbindung zwischen dem Verschluss und einem Gerüstelement herzustellen oder aufzuheben. Das Verbindungselement umfasst einen Haltebereich und einen Führungsbereich, welche benachbart zueinander angeordnet sind. Das Verbindungselement erstreckt sich entlang einer Verschlussachse. Gleichzeitig ist die Lagerung des Verbindungselementes im Gehäuse so ausgeführt, dass das Verbindungselement relativ zum Gehäuse entlang der Verschlussachse verschiebbar und um die Verschlussachse verdrehbar ist. Der Haltebereich umfasst einen Kopf, welcher zur formschlüssigen Verbindung mit einem Gerüstelement vorgesehen ist. Der Kopf ist über einen Schaft mit dem Haltebereich verbunden. Der Kopf ist dabei so ausgeführt, dass er in radialer Richtung zur Verschlussachse zumindest auf einer Seite über den Schaft vorsteht. Dieses Vorstehen kann, wie später beschrieben, zur Herstellung einer formschlüssigen Verbindung mit einem Gerüstelement genutzt werden. Bevorzugt steht der Kopf in zwei einander gegenüberliegenden Richtungen radial über den Schaft vor. Das Spannelement ist bereichsweise in das Verbindungselement und das Gehäuse eingeschoben, jedoch ist das Spannelement auch beweglich zum Verbindungselement und zum Gehäuse gelagert. Bei der Verwendung des Gerüstriegels wird das Spannelement durch einen Bediener bewegt und dadurch der Verschluss betätigt. Durch eine Bewegung des Spannelementes wird das Verbindungselement im Inneren des feststehenden Gehäuses so bewegt, dass eine Verbindung zwischen dem Kopf und einem Gerüstelement hergestellt und wieder aufgehoben werden kann. Jeder Verschluss ist somit als Verbindungsstelle mit einem Gerüstelement vorgesehen.

Insgesamt umfasst der erfindungsgemäße Gerüstriegel somit vier Verbindungsstellen, von denen zwei durch bekannte Verbindungsschnittstellen gebildet werden und zwei weitere durch jeweils einen Verschluss, welcher beabstandet zu den Verbindungsschnittstellen angeordnet ist. Durch diese vier Verbindungsstellen, mit denen der erfindungsgemäße Gerüstriegel in einem Gerüstabschnitt verbunden werden kann, wird die Übertragbarkeit von Kräften und Momenten durch den Gerüstriegel gegenüber einem bekannten Horizontalriegel signifikant verbessert. Insbesondere die beabstandete Anordnung der Verbindungsstellen ermöglicht eine deutlich verbesserte Übertragung von Momenten. Ein einziger erfindungsgemäße Gerüstriegel kann auf diese Weise deutlich mehr Kräfte und Momente übertragen, ohne zusätzliche Schnittstellen zum Anschluss der bekannten Verbindungsschnittstellen zu benötigen. Durch die Verwendung eines erfindungsgemäßen Gerüstriegels in einem Gerüstabschnitt kann dessen Tragfähigkeit somit verbessert werden, ohne die Anzahl der Elemente in den Gerüstabschnitt zu erhöhen. Weiter vorteilhaft an einem erfindungsgemäßen Gerüstriegel ist, dass vorhandene und bekannte Schnittstellen an anderen Gerüstelementen weiterhin genutzt werden können. Der erfindungsgemäße Gerüstriegel ist somit einfach in bestehende Gerüstsysteme integrierbar. Darüber hinaus ist der Gerüstriegel einfach und kompakt aufgebaut und die erfindungsgemäß vorgesehenen Verschlüsse sind einfach und ergonomisch zu bedienen. Die Formgebung des Gerüstriegels mit seinem Basisriegel und den zwei dazu im Winkel angeschlossenen Auslegern beansprucht deutlich weniger Raum in einem Gerüstabschnitt, als die parallele Anordnung von zwei bekannten Horizontalriegeln, welche ebenfalls zur Erhöhung der Tragfähigkeit eines Gerüstabschnittes verwendet werden können. Durch einen erfindungsgemäßen Gerüstriegel werden Arbeiter und Arbeiten auf dem Gerüstabschnitt somit deutlich weniger behindert, als bei der Verstärkung der Tragfähigkeit eines Gerüstabschnittes durch zwei zueinander parallel angeordnete Horizontalriegel.

In einer Ausführungsform ist vorgesehen, dass das Verbindungselement im Gehäuse axial verschiebbar zur Verschlussachse und drehbar um die Verschlussachse gelagert ist. In dieser Ausführungsform ist das Verbindungselement linear und rotatorisch relativ zum Gehäuse beweglich. Dies ermöglicht eine Zustellbewegung zu einem Gerüstelement und eine Verriegelung in einen Gerüstelement.

Des Weiteren ist vorgesehen, dass die Verschlussachse parallel zur Längsachse orientiert ist. In dieser Ausführungsform erfolgt die Verbindung zwischen Verschluss und einen Gerüstelement bevorzugt in horizontaler Richtung. Dadurch ist die Verbindung zwischen dem Verschluss und dem Gerüstelement herstellbar, wenn eine Verbindungsschnittstellen des Riegelträgers bereits mit dem Gerüstelement verbunden ist.

Geschickter Weise ist vorgesehen, dass das Verbindungselement durch eine Gleitlagerung im Gehäuse beweglich gelagert ist. Diese Ausführungsform besteht eine Gleitlagerung zwischen Gehäuse und Verbindungselement und/oder zwischen Verbindungselement und Spannelement. Diese Gleitlagerung kann durch Zugabe eines Schmierstoffes, wie beispielsweise Fett, unterstützt werden.

Vorteilhafter Weise ist vorgesehen, dass der Führungsbereich zumindest bereichsweise zylindrisch ausgeführt ist und im Gehäuse zumindest bereichsweise eine zylindrische Ausnehmung eingebracht ist, wobei der Innendurchmesser der zylindrischen Ausnehmung größer als der Außendurchmesser des zylindrischen Bereiches des Führungsbereiches ist und zwischen der zylindrischen Ausnehmung und dem Führungsbereich eine Spielpassung besteht und das Verbindungselement zumindest bereichsweise innerhalb des Gehäuses angeordnet ist. In dieser Ausführungsform besteht eine Spielpassung zwischen dem Inneren des Gehäuses und dem Äußeren des Führungsbereiches des Verbindungselementes. Diese Spielpassung erlaubt eine leichte Montage und Betätigung des Verschlusses.

In einer Ausführungsform ist vorgesehen, dass das Verbindungselement in Richtung der Verschlussachse länger als das Gehäuse ist. Dadurch steht das Verbindungselement stets auf zumindest einer Seite über das Gehäuse vor und kann somit von einem Bediener stets gegriffen und bewegt werden. Auf diese Weise ist auch eine Einleitung von Kraft durch Hammerschläge auf ein Ende des Verbindungselementes möglich.

Des Weiteren ist vorgesehen, dass das im Führungsbereich eine Spannelementaufnahme eingebracht ist, welche als Öffnung ausgebildet ist, die den Führungsbereich in radialer Richtung zur Verschlussachse durchdringt. Diese Spannelementaufnahme nimmt im montierten Zustand des Verschlusses das Spannelement zumindest teilweise auf. Bevorzugt ist die Spannelementaufnahme als radial zur Verschlussachse verlaufende Öffnung im Führungsbereich ausgestaltet und weist eine im Querschnitt rechteckige Fläche auf. Die Größe und Position der Spannelementaufnahme ist so gewählt, dass das Spannelement im später beschriebenen Öffnungszustand darin mit einer Spielpassung bewegt werden kann, im später beschriebenen Verriegelungszustand jedoch an zumindest einer Fläche der Spannelementaufnahme anliegt.

Vorteilhafter Weise ist vorgesehen, dass die Querschnittsfläche der Spannelementaufnahme in einer Richtung radial zur Verschlussachse unterschiedlich groß ausgeführt ist. Darunter ist zu verstehen, dass entlang einer Richtung radial zur Verschlussachse sich die Form der Spannelementaufnahme kontinuierlich verändert. Bevorzugt ist zumindest eine Begrenzungsfläche der Spannelementaufnahme dabei in einem Winkel zu einer Ebene senkrecht zur Verschlussachse orientiert. Dadurch wird eine entsprechende Gegenform zu einem keilförmig ausgeführten Spannelement bereitgestellt. Über eine Keilform des Spannelementes und/oder der Spannelementaufnahme kann eine Übersetzung einer senkrecht zur Verschlussachse gerichteten Bewegung des Spannelementes in eine parallel zur Verschlussachse gerichtete Bewegung des Verbindungselementes bereitgestellt werden. Bevorzugt ist die Querschnittsfläche der Spannelementaufnahme auf einer Außenseite des Führungsbereiches größer auf der gegenüberliegenden Außenseite des Führungsbereiches, wobei sich die Querschnittsfläche zwischen diesen beiden Außenseiten linear verändert.

Bevorzugt ist vorgesehen, dass an dem Führungsbereich auf seiner in Richtung der Verschlussachse dem Verbindungsbereich abgewandten Seite eine Krafteinleitungsfläche angeordnet ist, welche zumindest bereichsweise senkrecht zur Verschlussachse orientiert ist. Eine solche Krafteinleitungsfläche kann dazu genutzt werden, eine Kraft direkt auf das Verbindungselement aufzubringen und diese somit entlang der Verschlussachse relativ zum Gehäuse zu bewegen. Dadurch kann das Verbindungselement auch ohne Betätigung des Spannelementes im Gehäuse bewegt werden. Die Bedienbarkeit des Verschlusses wird somit durch das Vorsehen einer Krafteinleitungsfläche zusätzlich erleichtert.

Des Weiteren ist vorgesehen, dass der Schaft einen zylindrischen Querschnitt aufweist, welcher im Wesentlichen senkrecht zur Verschlussachse orientiert ist. Eine solche zylindrische Ausführung des Schaftes ermöglicht eine kompakte und stabile Formgebung des Haltebereiches. Darüber hinaus weist ein zylindrischer Schaft keine scharfen Kanten auf, die bei der Verbindung des Verschlusses mit einem Gerüstelement Kollisionen erzeugen könnten.

Es ist vorgesehen, dass der Schaft den Führungsbereich mit dem Kopf verbindet. Der Schaft ist somit zwischen den Kopf und dem zylindrischen Bereich des Führungsbereiches angeordnet.

Des Weiteren ist vorgesehen, dass der Kopf in seinem über den Schaft vorstehenden Bereich eine gekrümmte Anlagefläche aufweist, welche zum Führungsbereich hinweist. In dieser Ausführungsform ist am Kopf eine gekrümmte Anlagefläche vorgesehen, welche bei einer Verbindung des Verschlusses mit einem Gerüstelement im Inneren dieses Gerüstelementes anliegt. Diese gekrümmte Anlagefläche ist auf der Seite des Kopfes angeordnet, welche zum Schaft und zum Führungsbereich hinweist. Eine solche gekrümmte Anlagefläche ist besonders vorteilhaft zur Anlage an einem Gerüstelement, welches ebenfalls gekrümmt ausgeführt ist. Die gekrümmte Anlagefläche kann auch zweiteilig ausgeführt sein, wobei die beiden Teile der gekrümmten Anlagefläche auf einander gegenüberliegenden Seiten der Verschlussachse angeordnet sind. Durch eine solche zweiteilige Ausführung ist ein symmetrischer Kraftfluss zwischen dem Kopf und einem damit verbundenen Gerüstelement sichergestellt, was die Übertragung hoher Kräfte und Momente ermöglicht.

Bevorzugt ist vorgesehen, dass die gekrümmte Anlagefläche einen Teil einer Mantelfläche eines Kreiszylinders bildet. Diese Ausführungsform ist besonders vorteilhaft, wenn das Innere eines Gerüstelementes, an dem die gekrümmte Anlagefläche des Kopfes bei einer Verbindung zwischen Verschluss und Gerüstelement anliegt, ebenfalls die Form einer Mantelfläche eines Kreiszylinders aufweist.

In einer vorteilhaften Ausgestaltung ist vorgesehen, dass das Verbindungselement eine gedachte Kopfebene aufweist, welche sich entlang der Verschlussachse erstreckt und welche den Führungsbereich halbiert, wobei der Kopf in der Kopfebene beidseitig zur Verschlussachse über den Schaft vorsteht. In dieser Ausführungsform definiert eine gedachte Kopfebene eine Ebene, welche durch das Verbindungselement verläuft. Diese Kopfebene ist parallel zur Verschlussachse ausgerichtet und halbiert den Führungsbereich in radialer Richtung zur Verschlussachse. Die Kopfebene schneidet den Kopf so, dass der Kopf innerhalb der Kopfebene beidseitig in einer Richtung senkrecht zur Verschlussachse über den Schaft vorsteht. Bevorzugt ist die Kopfebene so orientiert, dass sie den Kopf dort schneidet, wo dieser am weitesten in radialer Richtung zur Verschlussachse über den Schaft vorsteht.

Des Weiteren ist günstiger Weise vorgesehen, dass die gekrümmte Anlagefläche zumindest teilweise durch einen Teil einer Mantelfläche eines Kreiszylinders gebildet wird, wobei die Mittelachse des Kreiszylinders senkrecht zur Kopfebene orientiert ist. In dieser Ausführungsform verläuft die Krümmungsachse der gekrümmten Anlagefläche senkrecht zur Kopfebene. Wird bei einer Verbindung der Kopf zur Anlage im Inneren eines Gerüstelementes gebracht, wird die Kopfebene senkrecht zur Längsachse des Gerüstelementes orientiert. Somit verläuft dann die Krümmungsachse der gekrümmten Anlagefläche parallel oder sogar deckungsgleich mit der Längsachse des Gerüstelementes. Da die Innenfläche des Gerüstelementes bevorzugt der Mantelfläche eines Kreiszylinders entspricht, ist in dieser Ausführungsform ein großflächiges Anliegen zwischen der gekrümmten Anlagefläche und dem Inneren des Gerüstelementes sichergestellt. Dadurch, dass sowohl die Anlagefläche als auch die Innenfläche des Gerüstelementes die Form eines Teils eines Kreiszylinders aufweisen ist auch ein Formschluss zwischen dem Kopf und dem Gerüstelement gegeben.

Des Weiteren ist vorgesehen, dass der Kopf symmetrisch zur Kopfebene geformt ist. In dieser Ausführungsform erstreckt sich der Kopf auf beiden Seiten der Kopfebene und ist symmetrisch zu dieser aufgebaut. Bevorzugt verlaufen die Außenflächen des Kopfes auf beiden Seiten der Kopfebene parallel zur Kopfebene.

Bevorzugt ist vorgesehen, dass der Kopf in einer Richtung senkrecht zur Kopfebene dünner ist als in einer Richtung in der Kopfebene und senkrecht zur Verschlussachse. In dieser Ausführungsform ist die Abmessung des Kopfes senkrecht zur Kopfebene geringer als innerhalb der Kopfebene und senkrecht zur Verschlussachse. Für eine formschlüssige Verbindung zwischen dem Verbindungselement und einem Gerüstelement ist das Vorstehen des Kopfes innerhalb der Kopfebene senkrecht zur Verschlussachse von größter Bedeutung, da in dieser Richtung eine Anlage zwischen dem Kopf und dem Inneren des Gerüstelementes erfolgt. Je größer die Anlagefläche zwischen dem Kopf und dem Gerüstelement ist, desto größer sind die Kräfte und Momente, die über diese Anlage übertragen werden können.

Weiterhin ist vorgesehen, dass der Kopf in der Kopfebene symmetrisch zur Verschlussachse geformt ist. Diese Ausführungsform steht der Kopf in der Kopfebene über beide Seiten der Verschlussachse gleich weit vor. Dadurch ist eine symmetrische Anlage im Inneren eines Gerüstelementes zwischen dem Kopf und dem Gerüstelement möglich. Eine solche symmetrische Anlage ist besonders günstig für eine effektive Übertragung von Kräften und Momenten.

Des Weiteren ist vorgesehen, dass die Spannelementaufnahme sich zumindest bereichsweise senkrecht zur Kopfebene erstreckt. Diese Ausführungsform verläuft die Erstreckungsrichtung der Spannelementaufnahme durch den Führungsbereich zumindest bereichsweise senkrecht zur Kopfebene. Auf diese Weise ist ein in die Spannelementaufnahme eingebrachtes Spannelement von einem Bediener auch in einem Öffnungszustand bequem zu erreichen, in dem die Kopfebene parallel zur Längsachse eines Gerüstelementes orientiert ist. Auch in diesem Öffnungszustand steht das Spannelement seitlich über das Gehäuse vor und kann per Hand oder mit einem Hammer in einfacher Weise und ohne Kollisionsgefahr mit dem Ausleger erreicht und bedient werden.

Des Weiteren ist vorgesehen, dass die Spannelementaufnahme einen im Wesentlichen rechteckigen Querschnitt parallel zur Kopfebene aufweist. Eine solche rechteckige Form des Querschnittes ist besonders geeignet zur Aufnahme eines Spannelementes, welches eine rechteckige Außenform bzw. einen rechteckigen Querschnitt aufweist. Darüber hinaus ist ein solcher rechteckiger Querschnitt einfach in den Führungsbereich einzubringen.

Bevorzugt ist vorgesehen, dass die Spannelementaufnahme zumindest eine Winkelfläche aufweist, welche in einem Winkel zwischen 0,5° und 45° zu einer Ebene ausgerichtet ist, welche senkrecht zur Verschlussachse orientiert ist. In dieser Ausführungsform ist in der Spannelementaufnahme eine Winkelfläche angeordnet, welche als Anlagefläche zu einer Keilfläche des Spannelementes vorgesehen ist. Diese Winkelfläche ist in einem spitzen Winkel relativ zu einer Ebene ausgerichtet welche im rechten Winkel zur Verschlussachse orientiert ist. Bevorzugt beträgt dieser Winkel wenige Grad, beispielsweise 1° bis 15°. Die anderen Begrenzungsflächen in der Spannelementaufnahme sind bevorzugt senkrecht zur Verschlussachse und/oder parallel zu einer Ebene orientiert, welche senkrecht zur Kopfebene und parallel zur Verschlussachse orientiert ist. Die Winkelfläche ist bevorzugt auf der dem Kopf abgewandten Seite der Spannelementaufnahme angeordnet.

Weiterhin ist vorgesehen, dass das Spannelement eine gedachte Spannelementebene umfasst, wobei die Spannelementebene das Spannelement durchdringt, insbesondere wobei das Spannelement in Dickenrichtung symmetrisch zur Spannelementebene aufgebaut ist, wobei das Spannelement in einer Draufsicht auf die Spannelementebene zumindest bereichsweise keilförmig geformt ist und eine Keilfläche aufweist, welche das Spannelement senkrecht zur Spannelementebene begrenzt und das Spannelement weiterhin eine Anlagefläche aufweist, welche das Spannelement senkrecht zur Spannelementebene auf einer der Keilfläche gegenüberliegenden Seite begrenzt, wobei die Keilfläche zur Anlagefläche in einem Winkel zwischen 0,5° und 45° orientiert ist. Die Spannelementebene dient dazu, das Spannelement eindeutig zu beschreiben und dessen Wechselwirkung mit den anderen Elementen des Verschlusses zu erläutern. Die Spannelementebene durchdringt das Spannelement und halbiert dieses in seiner Dickenrichtung. Die beiden größten Außenflächen des Spannelementes sind parallel und symmetrisch zur Spannelementebene orientiert. In einer Draufsicht auf diese Spannelementebene ist zumindest ein Teilbereich des Spannelementes keilförmig ausgeführt, wobei dieser Teilbereich durch eine Keilfläche und eine Anlagefläche begrenzt wird. Die Keilfläche nimmt zu der Anlagefläche einen Winkel zwischen 0,5° und 45° ein. Bevorzugt entspricht dieser Winkel dem Winkel, in dem die Winkelfläche der Spannelementaufnahme zu einer Ebene senkrecht zur Verschlussachse orientiert ist. Besonders bevorzugt beträgt daher der Winkel zwischen Keilfläche und Anlagefläche zwischen 1° und 15°. Die Keilfläche und die Anlagefläche sind einander gegenüberliegend angeordnet und erstrecken sich senkrecht zur Spannelementebene.

In einer Ausführungsform ist vorgesehen, dass das Spannelement einen Krafteinleitungsbereich aufweist, welche in einer Draufsicht auf die Spannelementebene angrenzend an die Keilfläche angeordnet ist, wobei der Krafteinleitungsbereich in einer Draufsicht auf die Spannelementebene zumindest eine Krafteinleitungsfläche aufweist, welche im Wesentlichen senkrecht zur Anlagefläche ausgerichtet ist. Dieser Krafteinleitungsbereich kann genutzt werden, dass Spannelement zu greifen oder mithilfe von Werkzeug, beispielsweise eines Hammers, zu bewegen. Der Krafteinleitungsbereich ist an einem Ende des keilförmigen Teilbereiches angeordnet. Der Krafteinleitungsbereich umfasst eine bevorzugt plane Krafteinleitungsfläche, welche in einer Draufsicht auf die Spannelementebene zumindest bereichsweise senkrecht zur Anlagefläche des Spannelementes ausgerichtet ist. Die Krafteinleitungsfläche steht im montierten Zustand des Verschlusses parallel orientiert zur Verschlussachse.

Des Weiteren ist vorgesehen, dass das Gehäuse in seinem Inneren eine zumindest bereichsweise zylindrisch ausgeführte Ausnehmung aufweist, deren Mittelachse deckungsgleich zur Verschlussachse orientiert ist. Eine solche zylindrische Ausnehmung ermöglicht eine positionsgenaue Aufnahme des zylindrisch geformten Bereiches des Führungsbereiches des Verbindungselementes.

Bevorzugt ist vorgesehen, dass das Gehäuse an zwei gegenüberliegenden Enden in Richtung der Verschlussachse jeweils eine Öffnung aufweist. Diese Öffnungen sind bevorzugt so geformt und dimensioniert, dass das Verbindungselement durch zumindest eine dieser Öffnungen in das Gehäuse eingebracht und wieder aus diesem entnommen werden kann. Auf diese Weise ist der Verschluss einfach zu montieren und kann bei Bedarf auch gewartet oder instandgesetzt werden.

Des Weiteren ist vorgesehen, dass das Gehäuse in seiner Gehäusewand, welche die zumindest bereichsweise zylindrisch ausgeführte Ausnehmung begrenzt, eine Betätigungsöffnung aufweist, welche die Gehäusewand durchdringt, wobei die Betätigungsöffnung zumindest eine Spannfläche aufweist, welche senkrecht zur Verschlussachse orientiert ist und welche die Betätigungsöffnung in Richtung der Verschlussachse, auf der dem zweiten Verschluss abgewandten Seite begrenzt. In der Gehäusewand ist eine Betätigungsöffnung eingebracht, durch welche das Spannelement durch die Gehäusewand in das Verbindungselementes geführt wird. Die Betätigungsöffnung ist signifikant größer als die Querschnittsfläche des Spannelementes. Bevorzugt weist die Betätigungsöffnung eine unregelmäßig geformte Begrenzung auf. Teil dieser unregelmäßigen Begrenzung ist eine Spannfläche, welche senkrecht zur Verschlussachse orientiert ist und bevorzugt eben ausgeführt ist. Diese Spannfläche begrenzt die Betätigungsöffnung auf der Seite, welche dem am gegenüberliegenden Ende des Riegelelementes angeordneten zweiten Verschluss gegenüberliegend angeordnet ist. In der Gehäusewand können einander gegenüberliegend auch zwei Betätigungsöffnung angeordnet sein, von denen jede eine senkrecht zur Verschlussachse orientierte Spannfläche aufweist.

Bei einer bevorzugten Ausgestaltung ist vorgesehen, dass die Betätigungsöffnung eine Begrenzungsfläche aufweist, welche die Betätigungsöffnung in Richtung der Verschlussachse auf der dem zweiten Verschluss zugewandten Seite begrenzt, insbesondere wobei die Begrenzungsfläche parallel zur Spannfläche orientiert ist. In dieser Ausführungsform ist gegenüberliegend zur Spannfläche als Begrenzung der Betätigungsöffnung eine Begrenzungsfläche vorgesehen, welche parallel zur Spannfläche orientiert ist. Die Spannfläche dient im Verriegelungszustand als Anlagefläche für das Spannelement, wogegen die Begrenzungsfläche eine Anschlagfläche zur Begrenzung der Bewegung des Spannelementes im Öffnungszustand bildet.

Weiterhin ist vorgesehen, dass die Betätigungsöffnung einen Kulissenbereich aufweist, der Teil der Begrenzung der Betätigungsöffnung ist, wobei der Kulissenbereich die Spannfläche mit der Begrenzungsfläche verbindet, wobei der Kulissenbereich zumindest eine Führungsfläche umfasst, welche in einem Winkel zwischen 1° und 89° zur Spannfläche orientiert ist, wobei die Führungsfläche auf der Seite der Betätigungsöffnung angeordnet ist, welche der Verbindung des Gehäuses mit dem Ausleger gegenüberliegt. In dieser Ausführungsform ist die Begrenzungsfläche mit der Spannfläche über einen Kulissenbereich verbunden. Dieser Kulissenbereich bewirkt, dass das Spannelement bei einer Bewegung parallel zur Verschlussachse an diesem Kulissenbereich anschlägt und an diesem entlang gleitet und dadurch aus der linearen Bewegung des Spannelementes gleichzeitig eine Drehbewegung des Spannelementes um die Verschlussachse erzeugt wird. Der Kulissenbereich weist dazu zumindest eine Führungsfläche auf, welche in einem Winkel zwischen 89° und 1° zur Spannfläche und zur Begrenzungsfläche orientiert ist. Es können auch mehrere aneinander angrenzende Führungsflächen vorgesehen sein, welche sich in ihrem Winkel zur Spannfläche und zur Begrenzungsfläche unterscheiden. Darüber hinaus ist es auch möglich, die Führungsfläche gekrümmt auszuführen. Die Führungsfläche ist dabei auf der dem Ausleger gegenüberliegenden Seite der Betätigungsöffnung und/oder auf der dem Kopf zugewandten Seite der Betätigungsöffnung angeordnet.

Weiter bevorzugt ist vorgesehen, dass das Gehäuse an seiner in Richtung der Verschlussachse von dem zweiten Verschluss weg weisenden Seite eine zumindest bereichsweise gekrümmte Anlagefläche aufweist, deren Krümmungsachse senkrecht zur Verschlussachse und parallel zum Ausleger orientiert ist. In dieser Ausführungsform weist das Gehäuse an einer seiner senkrecht zur Verschlussachse orientierten Stirnseiten eine Anlagefläche auf, welche zur Anlage außen an einem Gerüstelement vorgesehen ist. Diese Anlagefläche ist bevorzugt konkav gekrümmt und auf der von dem gegenüberliegenden Verschluss weg weisenden Seite des Gehäuses angeordnet. Es können auch zwei gekrümmte Anlageflächen auf zwei einander um die Verschlussachse gegenüberliegenden Seiten des Gehäuses angeordnet sein. Da die Außenflächen vieler Gerüstelemente wie ein Kreiszylinder geformt sind, ist die Krümmung der Anlagefläche bevorzugt ebenfalls in der Form einer Mantelfläche eines Kreiszylinders ausgeführt. Die Anlagefläche bewirkt, dass das Gehäuse bei einer Verbindung des Verschlusses mit einem Gerüstelement großflächig an der Außenfläche des Gerüstelementes anliegt. Dies begünstigt die Übertragung von hohen Kräften und Momenten.

Des Weiteren ist vorgesehen, dass das Verbindungselement in die zylindrische Ausnehmung im Inneren des das Gehäuses eingebracht ist, wobei die Mittelachse der zylindrischen Ausnehmung deckungsgleich zur Verschlussachse ausgerichtet ist, wobei der Haltebereich von dem zweiten Verschluss weg weist. Im montierten Zustand des Verschlusses ist das Verbindungselementes so in das Gehäuse eingebracht, dass der Haltebereich mit dem Kopf von dem gegenüberliegenden Verschluss weg weist. Der Krafteinleitungsbereich des Verbindungselementes ist in Richtung des gegenüberliegenden Verschlusses orientiert.

Weiterhin ist vorgesehen, dass das Spannelement zumindest bereichsweise in das Gehäuse und das Verbindungselement eingebracht ist, wobei das Spannelement die Betätigungsöffnung und die Spannelementaufnahme durchdringt. Das Spannelement durchdringt bevorzugt sowohl das gesamte Gehäuse als auch das gesamte Verbindungselement radial zur Verschussachse. Dazu ist das Spannelement durch die Betätigungsöffnung in der Gehäusewand und die Spannelemente Aufnahme im Verbindungselement geführt.

Es ist vorgesehen, dass die Keilfläche parallel zur Winkelfläche und die Anlagefläche parallel zur Spannfläche ausgerichtet ist. Bei der Einbringung oder Montage des Spannelementes im Verbindungselement und im Gehäuse, wird die Keilfläche des Spannelementes parallel zur Winkelfläche der Spannelementaufnahme und/oder die Anlagefläche des Spannelementes parallel zur Spannfläche des Gehäuses ausgerichtet. Das Anliegen oder Zusammenspiel dieser Flächen wird benötigt, um den Verschluss vom Öffnungszustand in den Verriegelungszustand zu überführen. Selbstverständlich ist diese parallele Orientierung toleranzbehaftet, insbesondere beim Einführen besteht Spiel zwischen diesen Flächen, so dass sie nicht stets exakt parallel zueinander ausgerichtet sind.

Des Weiteren ist vorgesehen, dass ein Öffnungszustand des Verschlusses vorgesehen ist, in dem sich der Kopf im Inneren des Gehäuses befindet, die Kopfebene im Wesentlichen parallel zum Ausleger orientiert ist und das Spannelement um eine erste Distanz über das Verbindungselement vorsteht, wobei die erste Distanz die Distanz zwischen der äußeren Oberfläche des zylindrischen Bereiches des Führungsbereiches und der Krafteinleitungsfläche ist. Der Öffnungszustand ist ein Zustand, in dem der Verschluss nicht mit einem Gerüstelement verbunden ist, jedoch auf eine solche Verbindung vorbereitet ist. Zur Verbindung des Verschlusses mit einem Gerüstelement wird der Verschluss vom Öffnungszustand in den später beschriebenen Verriegelungszustand überführt. Im Öffnungszustand befindet sich der Kopf im Inneren des Gehäuses und steht nicht über diesen vor. Die Kopfebene ist dabei im Wesentlichen parallel zum Ausleger orientiert. Das bedeutet, dass die über den Schaft überstehenden Bereiche des Kopfes ebenfalls parallel zum Ausleger orientiert sind. Bevorzugt wird der Gerüstriegel mit einem vertikal orientierten Gerüstelement im Öffnungszustand verbunden. Das Spannelement steht im Öffnungszustand um eine erste Distanz über das Verbindungselement vor. Im Öffnungszustand liegt das Spannelement in einem Teilbereich des Kulissenbereiches an der Begrenzung der Betätigungsöffnung an. Durch dieses Aufliegen, welches durch die auf das Spannelemente wirkende Schwerkraft erzeugt wird, befindet sich der Verschluss bei einer im Wesentlichen senkrechten Orientierung des Auslegers stabil im Öffnungszustand. Stabil bedeutet hier, dass ohne manuelle Betätigung des Spannelementes der Verschluss durch Wirkung der Schwerkraft auf das Spannelement automatisch in der Öffnungsstellung verbleibt. Dies erleichtert eine Positionierung des Gerüstriegels zu dem Gerüstelement, mit dem er verbunden werden soll. Im Öffnungszustand wird die Verbindungsschnittstelle des Riegelträgers mit einer entsprechenden Schnittstelle an einem Gerüstelement verbunden. Bevorzugt ist in diesem verbundenen Zustand dann der Verschluss bereits korrekt zum Gerüstelement positioniert, um eine Überführung in den Verriegelungszustand vorzunehmen.

Weiterhin ist ein Verriegelungszustand des Verschlusses vorgesehen, in dem der Kopf über das Gehäuse vorsteht, die Kopfebene im Wesentlichen senkrecht zum Ausleger orientiert ist, die Keilfläche an der Winkelfläche anliegt, die Anlagefläche an der Spannfläche anliegt und das Spannelement um eine zweite Distanz über das Verbindungselement vorsteht, wobei die zweite Distanz die Distanz zwischen der äußeren Oberfläche des zylindrischen Bereiches des Führungsbereiches und der Krafteinleitungsfläche ist, wobei die zweite Distanz kleiner als die erste Distanz ist. In dem Verriegelungszustand kann der Verschluss mit einem Gerüstelement verbunden sein. Zur Herstellung dieser Verbindung steht der Kopf im Verriegelungszustand in Richtung der Verschlussachse über das Gehäuse des Verschlusses vor. Zusätzlich ist die Kopfebene im Vergleich zum Öffnungszustand um 90° verdreht und ist dann somit im Wesentlichen senkrecht zum Ausleger orientiert. Weiterhin liegt die Teilfläche des Spannelementes an der Winkelfläche der Spannelementaufnahme im Verbindungselement an. Darüber hinaus liegt die Anlagefläche des Spannelementes an der Spannfläche der Betätigungsöffnung des Gehäuses an. Im Verriegelungszustand ist das Spannelement tiefer in das Gehäuse und das Verbindungselement eingebracht, wobei die Krafteinleitungsfläche des Spannelementes um eine zweite Distanz über die Oberfläche des Verbindungselementes vorsteht. Diese zweite Distanz ist kleiner als die erste Distanz im Öffnungszustand. Zwischen dem Öffnungszustand und dem Verriegelungszustand sind selbstverständlich eine Vielzahl an Zwischenzuständen möglich, welche bei der Überführung vom Verschluss eingenommen werden.

Des Weiteren ist vorgesehen, dass das Spannelement in der Spannelementaufnahme gleitend gelagert ist. Die Gleitfähigkeit des Spannelementes in der Spannelementaufnahme kann zusätzlich durch das Vorsehen eines Schmierstoffes, beispielsweise von Fett, bei Bedarf verbessert werden.

Es ist vorgesehen, dass bei einer Überführung des Gerüstriegels vom Öffnungszustand in den Verriegelungszustand das Verbindungselement linear in Richtung der Verschlussachse von dem zweiten Verschluss weg bewegt wird und das Verbindungselement um die Verschlussachse gedreht wird, insbesondere um einen Winkel von im Wesentlichen 90° gedreht wird. Die Überführung des Verschlusses von dem Öffnungszustand in Verriegelungszustand und umgekehrt erfolgt durch eine Mischbewegung aus Translation und Rotation. Auf diese Weise kann der vorstehende Kopf des Verbindungselementes in eine Öffnung im Gerüstelement eingeführt und innerhalb der Öffnung so verdreht werden, dass ein Formschluss zwischen Verschluss und Gerüstelement entsteht.

Die zuvor beschriebenen Ausführungsformen betreffen alle einen Gerüstriegel mit zwei Verschlüssen. Offenbart ist auch ein solcher Verschluss ohne die übrigen Komponenten des Gerüstriegels. Die beschriebenen Ausführungsformen eines Verschlusses sind auch geeignet, um andere Elemente im Gerüstbereich oder auch in anderen technischen Bereichen sicher miteinander zu verbinden. Offenbart ist somit auch ein Verschluss umfassend ein Gehäuse und ein zu dem Gehäuse beweglich gelagertes Verbindungselement, wobei das Verbindungselement zumindest einen Haltebereich und einen Führungsbereich aufweist, wobei der Haltebereich und der Führungsbereich in der Richtung einer Verschlussachse nebeneinander und aneinander angrenzend angeordnet sind, wobei der Haltebereich einen Kopf und einen Schaft aufweisen, welche in der Richtung der Verschlussachse nebeneinander und aneinander angrenzend angeordnet sind und der Kopf zumindest bereichsweise in radialer Richtung zur Verschlussachse über den Schaft vorsteht, wobei der Kopf zur Herstellung einer formschlüssigen Verbindung mit einem Element vorgesehen ist und wobei der Verschluss zumindest ein Spannelement aufweist, welches mit dem Gehäuse und dem Verbindungselement beweglich, insbesondere formschlüssig, verbunden ist, wobei eine Bewegung des Spannelementes relativ zum Gehäuse das Verbindungselement in Richtung der Verschlussachse relativ zum Gehäuse bewegt. Die Ausführungsformen, welche im Zusammenhang mit dem Gerüstriegel offenbart sind, gelten auch in Zusammenhang mit dem Verschluss unabhängig vom Gerüstriegel als offenbart.

Die Aufgabe der Erfindung wird weiterhin gelöst durch einen Gerüstabschnitt umfassend zumindest einen Gerüstriegel nach einer der zuvor beschriebenen Ausführungsformen, weiter umfassend
zumindest ein Gerüstelement mit einem Stiel, welcher in seinem Inneren zumindest bereichsweise hohl ausgeführt ist und mit zumindest einer Riegelträgerschnittstelle, welche am Stiel befestigt ist, wobei in den Stiel in einem Bereich, in dem dieser hohl ausgeführt ist, eine Verschlussöffnung eingebracht ist, welche die Wand des Stiels durchdringt,
wobei die Verbindungsschnittstelle des Gerüstriegels mit der Riegelträgerschnittstelle des Gerüstelementes formschlüssig verbunden ist und der Verschluss des Gerüstriegels formschlüssig mit der Verschlussöffnung des Gerüstelementes verbunden ist, wobei diese beiden Verbindungsstellen beabstandet zueinander, insbesondere beabstandet zueinander in Längsrichtung des Stiels, angeordnet sind.

Ein erfindungsgemäßer Gerüstabschnitt umfasst neben einem Gerüstriegel zumindest ein Gerüstelement, welches über zwei Verbindungsstellen mit dem Gerüstriegel verbunden ist. Bevorzugt ist der Gerüstriegel jedoch mit zwei Gerüstelementen verbunden oder zwischen zwei Gerüstelement angeordnet. Das Gerüstelement kann beispielsweise durch einen Vertikalstiel gebildet werden. Das Gerüstelement umfasst stets einen Stiel, welcher in seinem Inneren zumindest bereichsweise hohl ausgeführt ist, um den Kopf eines Verschlusses des Gerüstriegels aufzunehmen. An dem Stiel ist zumindest eine Riegelträgerschnittstelle befestigt, welche zur Verbindung mit einer Verbindungsschnittstellen des Riegelträgers mit eines Gerüstriegels oder eines bekannten Horizontalriegels vorgesehen ist. Die Riegelträgerschnittstelle kann beispielsweise als Verbindungsscheibe mit Aufnahmeöffnungen ausgeführt sein. Weiterhin umfasst der Stiel zumindest eine Verschlussöffnung, welche in eine Wand des Stiels in einem hohlen Bereich angeordnet ist. Alternativ kann eine solche Verschlussöffnung auch an einem vom Stiel unabhängigen Element des Gerüstelementes angeordnet sein. In diesem Fall ist es auch möglich, dass der Stiel nicht bereichsweise innen hohl ausgeführt ist. Benachbart zu der Verschlussöffnung muss lediglich eine passende Anlagefläche für den Kopf des Verschlusses vorgesehen sein. In dem bevorzugten Fall, in dem die Verschlussöffnung in der Wand eines Stiels eingebracht ist, durchdringt diese die Wand komplett. Bei dem erfindungsgemäßen Gerüstabschnitt ist eine Verbindungsschnittstelle des Gerüstriegels mit der Riegelträgerschnittstelle des Gerüstelementes verbunden, wodurch eine erste Verbindungsstelle gebildet wird. Eine zweite Verbindungsstelle wird zwischen dem Verschluss und der Verschlussöffnung im Stiel des Gerüstelementes gebildet. Diese Verbindung wird im Verriegelungszustand des Verschlusses hergestellt. Die Verbindungsstelle zwischen dem Verschluss und der Verschlussöffnung ist im Abstand zu der Verbindungsstelle zwischen der Verbindungsschnittstelle des Gerüstriegels und der Riegelträgerschnittstelle des Gerüstelementes angeordnet. Auf diese Weise ist der Gerüstriegel mit dem Gerüstelement über zwei voneinander beanstandete Verbindungsstellen verbunden. Dadurch lassen sich in einem erfindungsgemäßen Gerüstabschnitt zwischen dem Gerüstriegel und dem Gerüstelement signifikant größere Kräfte und Momente übertragen als bei einer Verbindung zwischen dem Gerüstelement mit einem bekannten Horizontalriegel. Dabei kann die Verbindung zwischen dem Gerüstriegel und dem Gerüstelement in einfacher Weise hergestellt und wieder gelöst werden. Die Verbindung zwischen der Verbindungsschnittstelle und der Riegelträgerschnittstelle ist bekannt und wird von vielen Personen auf der Baustelle bereits beherrscht. Der Verschluss des Gerüstriegel ist in einfacher Weise zu bedienen und zu lösen, wodurch auch diese zweite Verbindungsstelle einfach und sicher hergestellt werden kann.

In einer Ausführungsform des Gerüstabschnittes ist vorgesehen, dass die Verschlussöffnung als Langloch ausgeführt ist, dessen längere Öffnungsweite parallel zur Längsrichtung des Stiels ausgerichtet ist. Eine solche Ausführung der Verschlussöffnung als Langloch ist besonders geeignet für die Verbindung mit dem Kopf des Verschlusses. Der Kopf kann im Öffnungszustand des Verschlusses in einfacher Weise in das schlitzförmige Langloch eingeführt werden. Nach der Verdrehung des Verbindungselementes des Verschlusses in den Verriegelungszustand ist der Kopf dann mit seinem über den Schaft vorstehenden Bereich im Wesentlichen rechtwinklig zur längeren Öffnungsweite des Langloches orientiert und liegt benachbart zum Langloch an der Innenwand des Stiels an. Dadurch wird der benötigte Formschluss für die Kraft- und Momentenübertragung zwischen Verschluss und Stiel hergestellt. Eine Verschlussöffnung in Form eines Langenloches kann auch in einfacher Weise nachträglich in bereits vorhandene Gerüstelemente eingebracht werden. Ein solches Langloch kann beispielsweise durch einen Fingerfräser in die Wand eines Spieles eingeschnitten werden. Dadurch ist es möglich, vorhandene Gerüstelemente, wie beispielsweise Vertikalstiele, zur Verbindung mit einem Gerüstriegel umzurüsten. Darüber hinaus weisen vorhandene Gerüstelemente manchmal bereits geeignete Langlöcher auf, welche als Verschlussöffnung genutzt werden können.

Des Weiteren ist vorgesehen, dass der Kopf bereichsweise durch die Verschlussöffnung in einen hohlen inneren Bereich des Stiels eingebracht ist und die Anlagefläche des Kopfes zumindest bereichsweise im Inneren des Stiels an dessen Wand benachbart zur Verschlussöffnung anliegt. In dieser Ausführungsform liegt die Anlagefläche des Kopfes, welche zum Schaft hin orientiert ist, im Inneren des Stiels benachbart zu den Begrenzungen der Verschlussöffnung an. Bevorzugt ist dabei die Anlagefläche des Kopfes formkomplementär zur Innenwand des Stiels gestaltet. Ist beispielsweise der Stiel im Inneren als Kreiszylinder geformt, so weist die Anlagefläche des Kopfes bevorzugt ebenfalls zumindest bereichsweise die Form eines Kreiszylinders auf. Die Krümmungsachsen der Innenwand des Stiels und der Anlagefläche des Kopfes sind dabei bevorzugt parallel oder deckungsgleich angeordnet. In einer solchen formkomplementären Ausführungsform liegt der Kopf großflächig im Inneren des Stiels an, was eine ausgezeichnete Übertragbarkeit von Kräften und Momenten bewirkt.

Es ist vorgesehen, dass bei der Verbindung zwischen dem Verschluss und dem Stiel im Verriegelungszustand ein in sich geschlossener Kraftfluss vorliegt, welcher vom Kopf über dessen Anlagefläche zur Wand des Stiels, von der Wand des Stiels zum daran anliegenden Gehäuse, von den Gehäuse über dessen Spannfläche und die Anlagefläche zum Spannelement, vom Spannelement über dessen Keilfläche und die Winkelfläche zum Verbindungselement und innerhalb des Verbindungselementes wieder zurück zum Kopf verläuft. Im Verriegelungszustand sind der Verschluss und der Stiel miteinander verspannt. Für diese Verspannung wird ein in sich geschlossener Kraftfluss erzeugt, welcher durch den Stiel, das Gehäuse, das Verbindungselement und das Spannelement fließt. Dieser Kraftfluss wird dadurch hergestellt, dass das Spannelement in das Verbindungselement hinein bewegt wird. Dabei gleitet die Teilfläche auf der Winkelfläche und bewegt dadurch das Verbindungselement entlang der Verschlussachse wieder ein Stück weg vom oder aus dem Stiel hinaus. Je weiter das Spannelement in das Verbindungselement eingebracht wird, desto stärker ist die Verspannung. Durch die Verspannung wird eine stabile, spielfreie Verbindung zwischen dem Verschluss und dem Gerüstelement sichergestellt.

Die Aufgabe der Erfindungen schließlich gelöst durch ein Verfahren zum Aufbau eines Gerüstabschnittes nach einer der zuvor beschriebenen Ausführungsformen, umfassend die Schritte
A) Überführen zumindest eines Verschlusses des Gerüstriegels in den Öffnungszustand, wobei die Kopfebene parallel zum Ausleger ausgerichtet wird,
B) Verbinden einer Verbindungsschnittstelle des Riegelträgers mit einer Riegelträgerschnittstelle des Gerüstelementes,
C) Überführen des Verschlusses des Gerüstriegels in den Verriegelungszustand, wobei das Verbindungselement entlang der Verschlussachse linear auf das Gerüstelement zu bewegt wird und der Kopf bereichsweise durch die Verschlussöffnung in das Innere des Stiels eindringt und anschließend das Verbindungselement um die Verschlussachse gedreht wird, solange bis die Kopfebene im Wesentlichen senkrecht zum Ausleger orientiert ist und anschließend das Spannelement betätigt wird, wobei das Verbindungselement entlang der Verschlussachse linear von dem Gerüstelement weg bewegt wird bis die Anlagefläche des Kopfes zumindest bereichsweise im Inneren des Stiels an dessen Wand anliegt.

Das erfindungsgemäße Verfahren dient dem Aufbau eines Gerüstabschnittes nach einer der zuvor beschriebenen Ausführungsformen. Das Verfahren wird bevorzugt in der Reihenfolge der Verfahrensschritte A) bis C) durchgeführt. Das Verfahren kann jedoch auch in umgekehrter Reihenfolge der Verfahrensschritte durchgeführt werden, um einen Gerüstabschnitt abzubauen oder zu demontieren.

In einem ersten Verfahrensschritt A) wird zumindest ein Verschluss des Gerüstriegels in den Öffnungszustand überführt, in dem der Kopf nicht über das Gehäuse vorsteht. Zur Überführung in den Öffnungszustand wird das Spannelement innerhalb der Begrenzungen der Betätigungsöffnung bewegt, so dass es auf einer dem Ausleger abgewandten Seite der Betätigungsöffnung anliegt. Im Öffnungszustand schließt das Gehäuse des Verschlusses in Richtung der Längsachse des Riegelträgers bündig mit der Verbindungsschnittstelle ab.

In einem zweiten Verfahrensschritt B) wird die Verbindungsschnittstelle des Riegelträgers formschlüssig mit einer Riegelträgerschnittstelle am Gerüstelement verbunden. Diese Verbindung erfolgt wie eine entsprechende Verbindung zwischen einem bekannten Horizontalriegel und den Gerüstelement. Am Ende des Verfahrensschrittes B) ist bereits eine erste Verbindungsstelle zwischen der Verbindungsschnittstelle und der Riegelträgerschnittstelle hergestellt. Das Gehäuse des Verschlusses liegt dabei bevorzugt bereits außen am Stiel des Gerüstelementes an. Eine belastbare Verbindung zwischen dem Verschluss und dem Gerüstelement ist in Verfahrensschritt B) jedoch noch nicht hergestellt.

In einem dritten Verfahrensschritt C) wird anschließend der Verschluss in den Verriegelungszustand überführt. Bei dieser Überführung in den Verriegelungszustand wird zunächst das Verbindungselement auf den Stiel zubewegt, solange bis der Kopf durch die Verschlussöffnung in das Innere des Stiels eingedrungen ist. Anschließend oder gleichzeitig wird das Verbindungselement um die Verschlussachse gedreht, um die vorstehenden Bereiche des Kopfes in Eingriff mit der Wand des Stiels zu bringen, welche die Verschlussöffnung umgibt. Die Drehbewegung wird bevorzugt dann beendet, wenn die Kopfebene senkrecht zum Ausleger und senkrecht zur längeren Öffnungsweite einer als Langloch ausgeführten Verschlussöffnung orientiert ist. In diesem Zustand besteht dann bereits ein Formschluss zwischen dem Verschluss und dem Stiel, es ist jedoch noch Spiel in der Verbindung vorhanden. Zur Schaffung eines Kraftschlusses zwischen dem Verschluss und dem Stiel wird anschließend das Spannelement betätigt, indem es in das Verbindungselementes hinein bewegt wird. Dadurch wird das Verbindungselementes entlang der Verschlussachse wieder ein Stück weg vom Stiel bewegt, so lange, bis die Anlagefläche des Kopfes innen am Stiel anliegt. Durch dieses Anliegen ist dann kein Spiel in der Verbindung zwischen Verschluss und Gerüstelement mehr vorhanden. Auf diese Weise wird eine stabile und spielfreie Verbindung an einer zweiten Verbindungsstelle zwischen dem Gerüstriegel und dem Gerüstelement hergestellt. Das erfindungsgemäße Verfahren ist einfach durchzuführen und resultiert in einem Gerüstabschnitt, welcher deutlich tragfähiger ist als ein entsprechender Gerüstabschnitt, in dem ein bekannter Horizontalriegel mit einem Gerüstelement verbunden ist. Durch die Gestaltung des Verschlusses ist während des erfindungsgemäßen Verfahrens stets eindeutig zu erkennen, in welchem Zustand sich der Verschluss befindet. Insbesondere die Position des Spannelementes gibt eindeutig Auskunft darüber, ob ein Verriegelungszustand, ein Öffnungszustand oder ein Zustand dazwischen vorliegt. Daher führt das erfindungsgemäße Verfahren zuverlässig zu einer sicheren Verbindung zwischen einem Gerüstriegel und einem Gerüstelement.

In einer Ausführungsform des Verfahrens ist vorgesehen, dass am Ende von Verfahrensschritt C) das Spannelement so lange weiter relativ zum Verbindungselement bewegt wird, bis eine Verspannung zwischen dem Verschluss und dem Gerüstelement auftritt und ein Formschluss und ein Kraftschluss zwischen dem Verschluss und dem Stiel vorliegen. Nachdem in Verfahrensschritt C) die Anlagefläche des Kopfes im Inneren des Stiels anliegt, kann das Spannelement weiter in das Verbindungselementes hinein bewegt werden. Durch diese weitere Bewegung werden dann der Verschluss und der Stiel miteinander verspannt und der erzeugte Kraftschluss wird verstärkt.

Des Weiteren ist vorgesehen, dass am Ende von Verfahrensschritt C) die Anlagefläche des Gehäuses an einer Außenfläche des Stiels anliegt, die Anlagefläche des Spannelementes an der Spannfläche des Gehäuses anliegt und die Keilfläche des Spannelementes an der Winkelfläche des Verbindungselementes anliegt. Bevorzugt liegt am Ende von Verfahrensschritt C) oder zumindest nach der Erzeugung einer Verspannung zwischen Verschluss und Stiel die gekrümmte Anlagefläche des Gehäuses an einer Außenfläche des Stiels an.

Es ist vorgesehen, dass in Verfahrensschritt C) bei der Betätigung des Spannelementes das Spannelement relativ zum Verbindungselement in einer Richtung im Wesentlichen senkrecht zur Verschlussachse bewegt wird und diese Bewegung durch das Anliegen der Keilfläche des Spannelementes an der Winkelfläche in eine Bewegung des Verbindungselementes entlang der Verschlussachse übersetzt wird. In Verfahrensschritte C) wird eine Bewegung des Spannelementes senkrecht zur Verschlussachse in eine Bewegung des Verbindungselementes entlang der Verschlussachse übersetzt. Diese Übersetzung erfolgt durch ein Gleiten der Keilfläche des Spannelementes auf der Winkelfläche des Verbindungselementes.

In einer weiteren Ausführungsform ist vorgesehen, dass im Öffnungszustand des Verschlusses die auf das Spannelement wirkende Schwerkraft das Verbindungselement in eine Drehlage dreht, in welcher die Kopfebene im Wesentlichen parallel zum Ausleger orientiert ist, wobei das mit dem Verbindungselement verbundene Spannelement an einer dem Ausleger abgewandten Begrenzungsfläche der Betätigungsöffnung des Gehäuses anliegt. In dieser Ausführungsform ist das Spannelement so gestaltet, dass es aufgrund der Schwerkraft stabil im Öffnungszustand gehalten wird. Dies ist besonders vorteilhaft, da dadurch die Verbindung des Verschlusses mit den Gerüstelement schneller und einfacher vorzunehmen ist. Bei der Verbindung der Verbindungsschnittstellen mit der Riegelträgerschnittstelle wird der Gerüstriegel meist verdreht oder verkippt. Während dieser Bewegungen verbleibt der Verschluss jedoch stabil automatisch im Öffnungszustand, so dass anschließend der Kopf des Verbindungselementes korrekt zur Verschlussöffnung positioniert ist. Dadurch kann direkt nach Abschluss von Verfahrensschritt B) mit der Überführung des Verschlusses in den Verriegelungszustand begonnen werden.

Des Weiteren ist vorgesehen, dass in Verfahrensschritt C) das Spannelement entlang der Führungsfläche der Betätigungsöffnung des Gehäuses gleitet, wodurch durch eine lineare Bewegung des Verbindungselementes und/oder des Spannelementes eine Rotationsbewegung des Verbindungselementes um die Verschlussachse erzeugt wird. Während der Überführung des Verschlusses vom Öffnungszustand in den Verriegelungszustand wird eine lineare Bewegung des Spannelementes und des Verbindungselementes entlang der Verschlussachse durch eine Wechselwirkung des Spannelementes mit zumindest einer Führungsfläche der Betätigungsöffnung in eine Rotationsbewegung des Verbindungselementes übersetzt. Dies vereinfacht weiter die Durchführung des Verfahrens, da lediglich eine lineare Bewegung in das Spannelement oder das Verbindungselement eingeleitet werden muss und automatisch die erforderliche Drehbewegung um die Verschlussachse erzeugt wird.

In einer Ausführungsform ist vorgesehen, dass in Verfahrensschritt C) die lineare Bewegung des Verbindungselementes entlang der Verschlussachse auf das Gerüstelement zu durch Einleiten einer Kraft in die Krafteinleitungsfläche des Verbindungselementes erfolgt. In dieser Ausführungsform kann die Überführung von Öffnungszustand in den Verriegelungszustand auch zumindest teilweise dadurch vorgenommen werden, dass eine Kraft und Bewegung in die Krafteinleitungsfläche des Verbindungselementes eingeleitet wird. Dies kann beispielsweise in einfacher Weise dadurch erfolgen, dass auf die Krafteinleitungsfläche ein Hammerschlag aufgebracht wird. Dadurch wird das Verbindungselement zusammen mit dem Spannelement entlang der Verschlussachse in Richtung des Stiels bewegt. Dadurch kann die Überführung von Öffnungszustand in den Verriegelungszustand zügig und einfach eingeleitet werden. Selbstverständlich ist es auch möglich, diese Überführung durch Aufbringen einer Kraft und einer Bewegung auf das Spannelement einzuleiten.

Merkmale, Wirkungen und Vorteile, welche in Zusammenhang mit dem Gerüstriegel und dem Gerüstabschnitt offenbart sind, gelten auch in Zusammenhang mit dem Verfahren als offenbart. Gleiches gilt in umgekehrter Richtung, Merkmale, Wirkungen und Vorteile, welche in Zusammenhang mit dem Verfahren offenbart sind, gelten auch im Zusammenhang mit dem Gerüstriegel und dem Gerüstabschnitt als offenbart.

In den Figuren sind Ausführungsformen der Erfindung schematisch dargestellt. Dabei zeigen
- Fig. 1: eine perspektivische Ansicht einer Ausführungsform eines erfindungsgemäßen Gerüstabschnittes,
- Fig. 2: eine Seitenansicht einer Ausführungsform eines erfindungsgemäßen Gerüstriegels,
- Fig. 3: eine Seitenansicht eines Verschlusses einer Ausführungsform eines erfindungsgemäßen Gerüstriegels im Öffnungszustand,
- Fig. 4: eine geschnittene Seitenansicht eines Verschlusses einer Ausführungsform eines erfindungsgemäßen Gerüstriegels im Öffnungszustand,
- Fig. 5: eine Seitenansicht eines Verschlusses einer Ausführungsform eines erfindungsgemäßen Gerüstriegels im Verriegelungszustand,
- Fig. 6: eine geschnittene Seitenansicht eines Verschlusses einer Ausführungsform eines erfindungsgemäßen Gerüstriegels im Verriegelungszustand,
- Fig. 7: eine teilweise geschnittene, perspektivische Ansicht einer Ausführungsform eines erfindungsgemäßen Gerüstabschnittes mit einem Verschluss im Öffnungszustand,
- Fig. 8: eine teilweise geschnittene, perspektivische Ansicht einer Ausführungsform eines erfindungsgemäßen Gerüstabschnittes mit einem Verschluss im Verriegelungszustand,
- Fig. 9: eine geschnittene Draufsicht auf die Verbindung zwischen einem Stiel und einem Verschluss im Verriegelungszustand.

In den Figuren sind gleiche Elemente mit gleichen Bezugszeichen versehen. Im Allgemeinen gelten die beschriebenen Eigenschaften eines Elementes, welche zu einer Figur beschrieben sind auch für die anderen Figuren. Richtungsangaben wie oben oder unten beziehen sich auf die beschriebene Figur und sind sinngemäß auf andere Figuren zu übertragen.

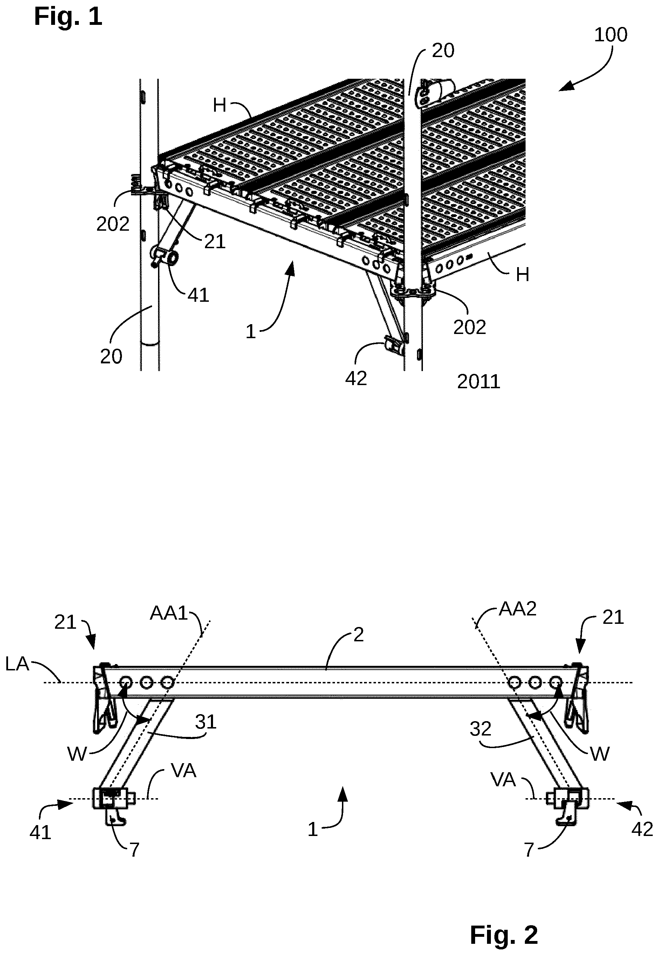

Fig. 1 zeigt eine perspektivische Ansicht einer Ausführungsform eines erfindungsgemäßen Gerüstabschnittes 100. Der dargestellte Gerüstabschnitt 100 umfasst einen Gerüstriegel 1, welcher hier mit seiner Längsachse LA horizontal ausgerichtet eingebaut ist. Der Gerüstriegel 1 ist im Detail in Fig. 2 dargestellt und dazu beschrieben. Der Gerüstriegel 1 ist mit jeweils einem Ende mit einem Gerüstelement 20 verbunden, welches hier durch einen Vertikalstiel gebildet wird. An jedem seiner Enden weist der Gerüstriegel 1 zwei Verbindungsstellen mit einem Gerüstelement 20 auf. Weiter oben am Gerüstelement 20 ist jeweils eine Riegelträgerschnittstelle 202 angeordnet, welche hier durch eine Verbindungsscheibe gebildet ist. Der Gerüstriegel 1 ist an jedem seiner Enden mit einer seiner Verbindungsschnittstellen 21 mit einer Riegelträgerschnittstelle 202 des Gerüstelementes 20 formschlüssig verbunden. Unterhalb der Riegelträgerschnittstelle 202 ist an jedem Gerüstelement 20 eine Verschlussöffnung 2011 angeordnet, welche in Richtung des Inneren des Gerüstabschnittes 100 weist. Diese Verschlussöffnungen 2011 sind in der Darstellung von jeweils einem Verschluss 41 und 42 des Gerüstriegels 1 verdeckt. Eine ähnliche Verschlussöffnung 2011 ist jedoch auf der nach vorne rechts weisenden Seite eines Gerüstelementes 20 zu sehen. Der Gerüstriegel 1 ist mit jeweils einem seiner Verschlüsse 41 und 42 mit einer Verschlussöffnung 2011 in einem Gerüstelement 20 verbunden. Auf diese Weise bestehen zwischen dem Gerüstriegel 1 und einem Gerüstelement 20 jeweils zwei Verbindungsstellen. Durch diese Verbindung über zwei Verbindungsstellen zwischen dem Gerüstriege 1 und einem Gerüstelement 20 können deutlich höhere Kräfte und Momente zwischen dem Gerüstriegel 1 und dem Gerüstelement 20 übertragen werden. Der dargestellte Gerüstabschnitt 100 ist somit deutlich tragfähiger und kann höhere Biegebelastungen aufnehmen als ein Gerüstabschnitt, in welchem anstelle des Gerüstriegels 1 ein bekannter Horizontalriegel eingebaut ist, welcher nur mit jeweils einer Verbindungsstelle mit einem Gerüstelement 20 verbunden ist. In der Darstellung sind weitere Gerüstelemente zu sehen. Ausgehend von den beiden vertikal orientierten Gerüstelementen 20 verlaufen jeweils nach rechts hinten zwei bekannte Horizontalriegel H, welche ebenfalls mit einer Riegelträgerschnittstelle 202 verbunden sind. Aufgelegt auf den Gerüstriegel 1 und die beiden Horizontalriegel H sind drei Trittbeläge zu sehen, welche zusammen eine Trittebene des Gerüstabschnittes 100 bilden.

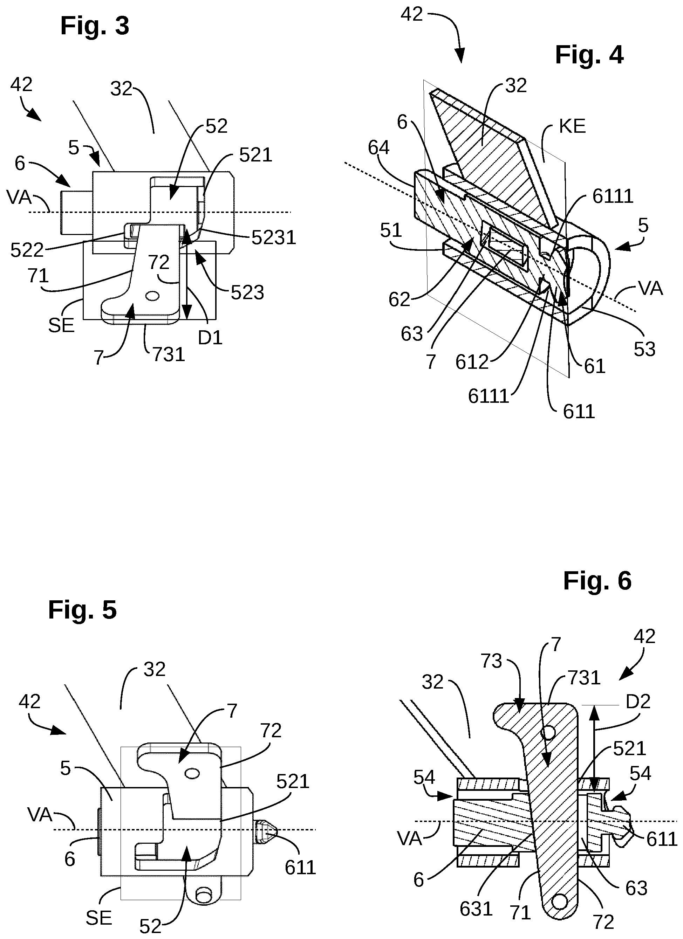

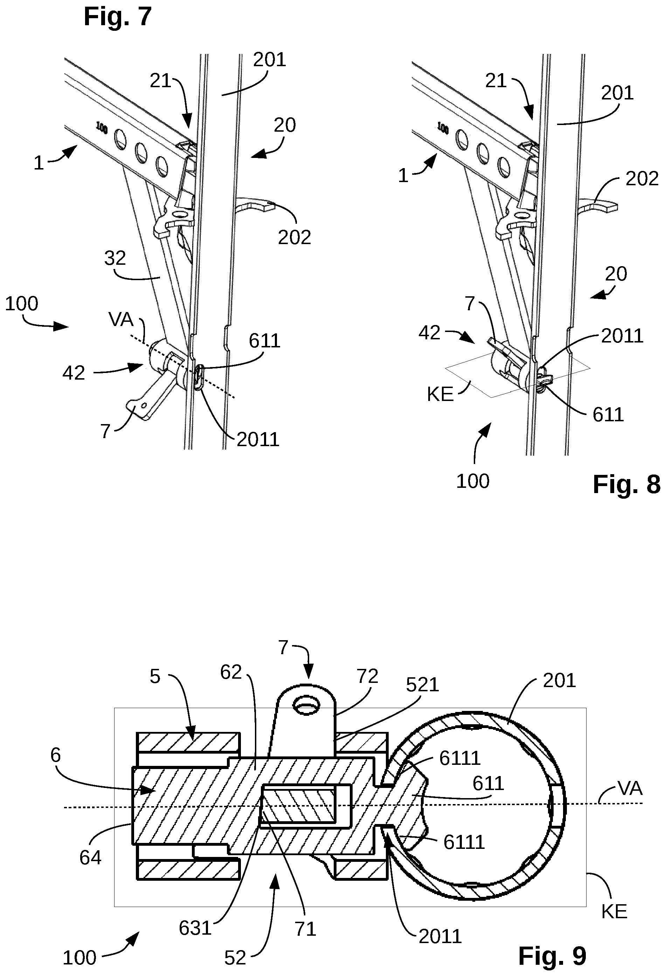

Fig. 2 zeigt eine Seitenansicht einer Ausführungsform eines erfindungsgemäßen Gerüstriegels 1. Fig. 2 zeigt den Gerüstriegel 1 aus Fig. 1. Der Gerüstriegel 1 umfasst einen in der Darstellung von links nach rechts orientierten Riegelträger 2. Dieser Riegelträger 2 ist stabförmig ausgeführt und wird hierdurch ein Rohr mit rechteckigem Querschnitt gebildet. Der Riegelträger 2 erstreckt sich entlang einer Längsachse LA. An den beiden einander gegenüberliegenden Enden des Riegelträgers 2 ist jeweils eine Verbindungsschnittstelle 21 angeordnet. Jede dieser Verbindungsschnittstellen 21 umfasst zwei Elemente, welche zueinander beweglich sind. Die Verbindungsschnittstelle 21 ist zur formschlüssigen Verbindung mit einem Gerüstelement 20, beispielsweise einem Vertikalstiel vorgesehen. Es sind Horizontalriegel bekannt, welche lediglich aus einem Riegelträger 2 mit zwei an dessen Enden angeordneten Verbindungsschnittstellen 21 bestehen. Solche Horizontalriegel weisen lediglich die beiden Verbindungsschnittstellen 21 als Verbindungsstellen zum Anschluss an andere Gerüstelemente 20 auf. Die dargestellte Ausführungsform eines erfindungsgemäßen Gerüstriegels 1 umfasst zusätzlich zwei weitere Verbindungsstellen, welche durch die beiden Verschlüsse 41 und 42 gebildet werden. Der Riegelträger 2 ist mit einem ersten Verschluss 41 über einen ersten Ausleger 31 fest verbunden. Weiterhin ist der Riegelträger 2 mit einem zweiten Verschluss 42 über einen zweiten Ausleger 32 fest verbunden. Der erste Ausleger 31 erstreckt sich entlang einer ersten Auslegerachse AA1, der zweite Ausleger 32 erstreckt sich entlang einer zweiten Auslegerachse AA2. Die Ausleger 31 und 32 sind in der dargestellten Ausführungsform durch massive, plattenförmige Elemente aus einem Eisenbasiswerkstoff hergestellt. Alternativ können die beiden Ausleger 31 und 32 auch durch Rohre gebildet werden. Die Ausleger 31 und 32 sind so dimensioniert, dass eine ausreichende Kraft- und Momenten Übertragung von den Verschlüssen 41 und 42 zum Riegelträger 2 möglich ist. Die beiden Auslegerachsen AA1 und AA2 sind jeweils in einem gleich großen Winkel W zur Längsachse LA orientiert. Der Winkel W beträgt in der dargestellten Ausführungsform in etwa 60°. Der Winkel W kann jedoch auch andere Werte annehmen, welche zwischen 1° und 89° liegen. Je kleiner der Winkel W gewählt wird, desto länger müssen die Ausleger 31 und 32 ausgeführt werden. Jeder Ausleger 31, 32 weist zwei einander gegenüberliegende Enden auf. Eines dieser Enden ist mit dem Riegelträger 2 verbunden, beispielsweise über eine Schweißverbindung. Es ist auch möglich diese Verbindung anders zu gestalten, beispielsweise als Steckverbindung oder Schraubverbindung. An dem zweiten Ende eines Auslegers 31, 32 ist jeweils ein Verschluss 41, 42 befestigt. Der Verschluss 41, 42 dient als Schnittstelle oder Verbindungsstelle zur Verbindung des Gerüstriegels 1 mit einem Gerüstelement 20. Details zum Aufbau und zur Funktion des Verschlusses 41, 42 sind in Fig. 3 bis 6 und in Fig. 9 dargestellt und dazu beschrieben. Der Verschluss 41, 42 umfasst ein Verbindungselement 6, welches sich entlang einer Verschlussachse VA erstreckt. Die Verschlussachse VA definiert auch die Richtung, in welcher sich das Verbindungselement 6 bei einer Verbindung mit einem Gerüstelement 20 bewegt. Bei einer solchen Verbindung des Verschlusses 41, 42 durch das Verbindungselement 6 mit einem Gerüstelement 20 wird das Verbindungselement 6 zunächst entlang der Verschlussachse VA auf das Gerüstelement 20 zu bewegt, anschließend um die Verschlussachse VA gedreht und abschließend wieder ein Stück entlang der Verschlussachse VA von Gerüstelement 20 weg bewegt. Details zur Herstellung und Lösung der Verbindung zwischen dem Verschluss 41, 42 und dem Gerüstelement 20 werden später beschrieben. Die Verschlussachse VA beider Verschlüsse 41 und 42 ist parallel zur Längsachse LA des Riegelträgers 2 orientiert. Die nach außen gewandten Enden der Verschlüsse 41 und 42 schließen in Richtung der Längsachse LA bündig mit der jeweils darüber angeordneten Verbindungsschnittstellen 21 ab. Jeder Verschluss 41 und 42 weist ein Spannelement 7 auf, welches auch in der Übersicht in Fig. 2 gut zu erkennen ist. Das Spannelement 7 dient der Betätigung des Verschlusses 41, 42. Durch in das Spannelement 7 eingeleitete Bewegungen und Kräfte kann der Verschluss 41, 42 von einem Öffnungszustand in einen Verriegelungszustand und umgekehrt überführt werden. In dem Öffnungszustand kann der Gerüstriegel 1 an ein Gerüstelement 20 angebracht oder von diesem entfernt werden. Im Verriegelungszustand ist der Gerüstriegel 1 formschlüssig und kraftschlüssig mit dem Gerüstelement 20 verbunden.

Fig. 3 zeigt eine Seitenansicht eines Verschlusses 42 einer Ausführungsform eines erfindungsgemäßen Gerüstriegels 1 im Öffnungszustand. In Fig. 3 ist der Verschluss 42, welcher in Fig. 2 rechts dargestellt ist, vergrößert gezeigt. Der Verschluss 41, welcher in Fig. 2 links dargestellt ist, entspricht dem Verschluss 42 ist jedoch symmetrisch zu einer gedachten Ebene ausgeführt, welche sich senkrecht zur Längsachse LA in der Mitte der Längsachse LA befindet. Oben in Fig. 3 ist das vom Riegelträger 2 weg weisende Ende des Auslegers 32 zu sehen. Der Verschluss 42 umfasst ein Gehäuse 5, welches mit dem Ausleger 32 fest verbunden ist. Das Gehäuse 5 weist außen eine im Wesentlichen zylindrische Form auf. Die Außenform des Gehäuses kann jedoch auch anders gestaltet sein. Im Inneren des Gehäuses 5 ist eine zylindrische Ausnehmung eingebracht, welche sich entlang der Verschlussachse VA erstreckt. Details zu dieser zylindrischen Ausnehmung sind beispielsweise in der Schnittansicht in Fig. 4 zu sehen. In diese zylindrische Ausnehmung im Gehäuse 5 ist das Verbindungselement 6 eingebracht und dort beweglich gelagert. Das Verbindungselement 6 ist zu Fig. 4 ausführlich beschrieben. Das Spannelement 7 ist in das Verbindungselement 6 und das Gehäuse 5 bereichsweise eingebracht. Das Spannelement 7 ist hier symmetrisch zu einer Spannelementebene SE aufgebaut. Die Spannelementebene SE durchdringt das Spannelement 7 in der Mitte seiner Dicke. Die Spannelementebene SE ist eine gedachte Ebene, welche die Beschreibung des Zusammenspiels des Spannelementes 7 mit anderen Elementen des Verschlusses 42 erleichtert. In einer Draufsicht auf die Spannelementebene SE ist das Spannelement bereichsweise keilförmig ausgeführt. Diese Keilform dient dazu, im Verriegelungszustand eine Spannkraft zu erzeugen. Die beschriebene Keilform besteht zwischen der in der Darstellung nach links orientierten Keilfläche 71 und der in der Darstellung nach rechts orientierten Anlagefläche 72. Die Keilfläche 71 und die Anlagefläche 72 sind in einer Draufsicht auf die Spannelementebene SE in einem Winkel zwischen 0,5° und 45° zueinander orientiert. In der dargestellten Ausführungsform beträgt dieser Winkel in etwa 10°. Angrenzend an den keilförmig ausgeführten Bereich weist das Spannelement 7 einen Krafteinleitungsbereich 73 auf, welcher in der Darstellung nach vorne orientiert ist. Dieser Krafteinleitungsbereich 73 weist zumindest eine Krafteinleitungsfläche 731 auf, welche hier senkrecht zur Spannelementebene SE und senkrecht zur Anlagefläche 72 orientiert ist. Das Spannelement 7 kann durch Krafteinleitung in die Krafteinleitungsfläche 731, beispielsweise durch Hammerschläge, in das Verbindungselement 6 und das Gehäuse 5 hinein bewegt werden, um eine Spannkraft zu erzeugen. In der in der Darstellung zum Betrachter hin gewandten vorderen Seite der Gehäusewand 51 des Gehäuses 5 ist eine unregelmäßig geformte Betätigungsöffnung 52 eingebracht. Die Betätigungsöffnung 52 durchdringt die Gehäusewand, so dass ein Teil des Verbindungselementes 6 zu sehen ist. Das Spannelement 7 ist durch die Betätigungsöffnung 52 in das Gehäuse 5 eingeführt. Die Betätigungsöffnung 52 begrenzt und führt die Bewegung des Spannelementes 7, welches formschlüssig mit dem Verbindungselement 6 verbunden ist, relativ zum Gehäuse 5. Auf der in der Darstellung nach rechts weisenden Seite der Betätigungsöffnung 52, die dem ersten Verschluss 41 gegenüberliegt, befindet sich eine plan ausgeführte Spannfläche 521, welche senkrecht zur Verschlussachse VA angeordnet ist. Im Verriegelungszustand liegt die Anlagefläche 72 Spannelementes 7 an der Spannfläche 521 an. Auf der der Spannfläche 521 gegenüberliegenden Seite der Betätigungsöffnung 52 ist eine ebenfalls plane Begrenzungsfläche 522 angeordnet. Diese Begrenzungsfläche 522 begrenzt die Bewegung des Spannelementes 7 in Richtung zum ersten Verschluss 41 im dargestellten Öffnungszustand. Es ist gut zu erkennen, dass wenn das Spannelement 7 zusammen mit dem Verbindungselement 6 in der Darstellung weiter nach links bewegt wird, die Keilfläche 71 an der Begrenzungsfläche 522 anschlägt, wodurch diese Bewegung begrenzt wird. Die Betätigungsöffnung 52 wird weiterhin bereichsweise durch einen Kulissenbereich 523 begrenzt. Diese Kulissenbereich 523 verbindet die Spannfläche 521 mit der Begrenzungsfläche 522 und erstreckt sich in der Darstellung auf der rechten und der unteren Seite der Begrenzungsöffnung 52. In der Darstellung liegt das Spannelement 7 mit seiner Unterseite bereichsweise am Kulissenbereich 523 auf. Der Kulissenbereich 523 weist zumindest eine in einem Winkel zur Spannfläche 521 angeordnete Führungsfläche 5231 auf. In der dargestellten Ausführungsform umfasst die Führungsfläche 5231 zwei Teilflächen, welche in unterschiedlichen Winkeln zur Spannfläche 521 orientiert sind. Die Führungsfläche 5231 hat die Aufgabe, aus einer auf das Spannelement 7 in Richtung der Verschlussachse VA eingeleiteten linearen Bewegung eine Drehbewegung des Verbindungselementes 6 zusammen mit dem Spannelement 7 um die Verschlussachse VA zu erzeugen. Wird das Spannelement 7 ausgehend von der in Fig. 3 dargestellten Position in Richtung der Verschlussachse VA nach rechts bewegt so gleitet die Anlagefläche 72 entlang des Kulissenbereiches 523 und der Führungsfläche 5231. Dadurch wird das Spannelement 7 um die Verschlussachse VA nach oben gedreht und hin zur Spannfläche 521 geführt. Der Winkel, welchen die Führungsfläche 5231 zur Spannfläche 521 einnimmt, beeinflusst das Maß, in dem eine lineare Bewegung des Spannelementes 7 in eine Rotationsbewegung übersetzt wird. Der Kulissenbereich 523 dient einer vereinfachten Bedienbarkeit des Verschlusses 42. Zur Überführung des Verschlusses 42 vom Öffnungszustand in den Verriegelungszustand muss lediglich in das Spannelement 7 eine lineare Bewegung in Richtung der Verschlussachse VA eingeleitet werden, was beispielsweise durch einen Hammerschlag auf den Krafteinleitungsbereich 73 erfolgen kann. Dadurch wird automatisch die ebenfalls zur Einnahme des Verriegelungszustandes benötigte Drehbewegung um die Verschlussachse VA erzeugt. Die Bedienung des Verschlusses 42 ist somit einfach und kann zuverlässig auch von ungeschultem Personal durchgeführt werden. Im dargestellten Öffnungszustand des Verschlusses 42 steht das Spannelement 7 um eine erste Distanz D1 über das Verbindungselement 6 vor. Diese erste Distanz D1 erstreckt sich von der äußeren Oberfläche des gezeigten zylindrischen Bereiches des Verbindungselementes 6 bis zur Krafteinleitungsfläche 731. Diese Distanz D1 von der Krafteinleitungsfläche 731 zur Oberfläche des Verbindungselementes 6 ist im Öffnungszustand größer als eine entsprechende zweite Distanz D2 im Verriegelungszustand.

Fig. 4 zeigt eine geschnittene Seitenansicht eines Verschlusses 42 einer Ausführungsform eines erfindungsgemäßen Gerüstriegels 1 im Öffnungszustand. In Fig. 4 ist der Zustand aus Fig. 3 geschnitten dargestellt. Die Schnittebene verläuft in der Mitte des Auslegers 32 in Dickenrichtung und halbiert den Verschluss 42. In dieser Schnittansicht ist die Form des Verbindungselementes 6 gut zu erkennen. Das Verbindungselement 6 umfasst einen nach vorne rechts orientierten Haltebereich 61, mit einem Kopf 611 und einem Schaft 612. Angrenzend an den Haltebereich 61 befindet sich ein Führungsbereich 62, welcher bereichsweise eine zylindrisch geformte Außenfläche aufweist. Das Verbindungselement 6 ist über eine Gleitlagerung zwischen der zylindrisch geformten Außenfläche des Führungsbereiches 62 und einer nach innen gewandten zylindrischen Fläche einer Ausnehmung im Gehäuse 5 gelagert. Zwischen dem Führungsbereich 62 und der zylindrischen Ausnehmung im Gehäuse 5 besteht dabei eine Spielpassung. Dadurch ist das Verbindungselement 6 im Inneren des Gehäuses 5 entlang der Verschlussachse VA verschiebbar und um die Verschlussachse VA verdrehbar. Das Verbindungselement 6 ist in Richtung der Verschlussachse VA insgesamt länger als das Gehäuse 5. Somit steht das Verbindungselement 6 stets auf einer Seite über das Gehäuse 5 vor. Im Führungsbereich 62 ist eine Spannelementaufnahme 63 eingebracht. Diese Spannelementaufnahme 63 durchdringt den Führungsbereich 62 in radialer Richtung und schneidet die Verschlussachse VA. Die Querschnittsfläche der Spannelementaufnahme 63 ist in der dargestellten Schnittansicht rechteckig ausgeführt. Dabei ist diese Querschnittsfläche in radialer Richtung zur Verschlussachse unterschiedlich groß. Dies ist in einer weiteren Schnittansicht in einer anderen Schnittebene in Fig. 6 gut zu erkennen. Der Führungsbereich 62 weist auf seiner dem Verbindungsbereich 61 abgewandten Seite eine Krafteinleitungsfläche 64 auf, welche hier senkrecht zur Verschlussachse VA orientiert ist. Diese Krafteinleitungsfläche 64 kann beispielsweise dazu genutzt werden, das Verbindungselement 6 durch Einleiten einer Kraft in Richtung der Verschlussachse VA, beispielsweise durch Hammerschläge, relativ zum Gehäuse 5 zu bewegen. Der Schaft 612 grenzt direkt an den Führungsbereich 62 an und ist hier zylindrisch und symmetrisch zur Verschlussachse VA ausgeführt. Der Schaft 612 verbindet den Führungsbereich 62 mit dem Kopf 611. Der Kopf 611 steht in der dargestellten Ausführungsform in zwei einander gegenüberliegenden Richtungen, senkrecht zur Verschlussachse VA über den Schaft 612 vor. Zur einfacheren Beschreibung des Kopfes 611 ist eine gedachte Kopfebene KE definiert. Diese Kopfebene KE verläuft parallel zur Verschlussachse VA und halbiert den Führungsbereich 62 in radialer Richtung. Die Kopfebene KE schneidet den Kopf 611 so, dass dieser in seiner Dickenrichtung symmetrisch zur Kopfebene KE geformt ist. Der Kopf 611 umfasst eine gekrümmte Anlagefläche 6111, welche zum Führungsbereich 62 hinweist. In der dargestellten Ausführungsform in der Schnittansicht, welche auch entlang der Kopfebene KE verläuft, ist zu erkennen, dass die Anlagefläche 6111 aus zwei Teilbereichen besteht, welche gegenüberliegend zur Verschlussachse angeordnet sind. Somit ist der dargestellten Ausführungsform der Kopf 611 in der Kopfebene KE symmetrisch zur Verschlussachse VA aufgebaut. Dies dient einer gleichmäßigen Kraftübertragung zwischen dem Kopf 611 und einen Gerüstelement 20, was in Fig. 9 deutlich zu erkennen ist. Bevorzugt bildet die gekrümmte Anlagefläche 6111 zumindest bereichsweise einen Teil einer Mantelfläche eines Kreiszylinders. Durch diese Formgebung ist eine großflächige Anlage der Anlagefläche 6111 an einer ebenfalls kreiszylindrisch geformten Innenfläche eines Gerüstelementes 20 gegeben. Die Mittelachse des Kreiszylinders, welcher die Form der gekrümmten Anlagefläche 6111 definiert verläuft senkrecht zur Kopfebene KE. Zwischen dem Kopf 611 und dem Führungsbereich 62 ist angrenzend an den Schaft 612 eine Hinterschneidung angeordnet, welche zur Herstellung eines Formschlusses zwischen dem Verbindungselement 6 und einen Gerüstelement 20 genutzt werden kann. Der Kopf 611 ist in einer Ebene senkrecht zur Kopfebene KE angespitzt. Das heißt, der Kopf 611 verjüngt sich in dieser Ebene in Richtung der Verschlussachse VA auf der vom gegenüberliegenden Verschluss 41 abgewandten Seite des Verbindungselementes 6. Durch diese Verjüngung wird das Einführen des Kopfes 611 in eine Verschlussöffnung 2011 eines Gerüstelementes 20 erleichtert. Die Dicke des Kopfes 611 senkrecht zur Kopfebene KE ist dünner als der Durchmesser des zylindrischen Bereiches des Führungsbereich 62. In der dargestellten Ausführungsform weist der Kopf 611 in einer Ebene senkrecht zur Kopfebene KE und senkrecht zur Verschlussachse VA zwei parallel zueinander verlaufende, äußere Begrenzungen auf. Auf diese Weise kann der Kopf 611 in eine als Langloch ausgeführte Verschlussöffnung 2011 eingeführt werden. In der dargestellten Ausführungsform erstreckt sich die Spannelementaufnahme 63 zumindest bereichsweise senkrecht zur Kopfebene KE. Die Erstreckungsrichtung der Spannelementaufnahme 63 kann jedoch auch anders als senkrecht zur Kopfebene, insbesondere verdreht dazu, verlaufen. Das Gehäuse 5 weist an seinen zwei einander gegenüberliegenden Enden in Richtung der Verschlussachse jeweils eine Öffnung 54 auf, welche hier kreisrund ausgeführt ist. Auf diese Weise kann das Verbindungselement 6 von beiden Seiten des Gehäuses 5 eingebracht und entnommen werden. Das Gehäuse 5 weist auf seiner dem Verschluss 41 in Richtung der Verschlussachse VA abgewandten Seite eine gekrümmte Anlagefläche 53 auf. Bei einer Verbindung des Gerüstriegels 1 mit einem Gerüstelement 20 liegt die Anlagefläche 53 an einer Außenfläche des Gerüstelementes 1 an. Bevorzugt ist diese Außenfläche des Gerüstelementes 20 eine zylindrisch ausgeführte Mantelfläche. Dadurch, dass die Anlagefläche 53 ebenfalls gekrümmt, bevorzugt zylindrisch gekrümmt, ist, wird eine großflächige, gleichmäßige Anlage zwischen Gerüstriegel 1 und Gerüstelement 20 bereitgestellt, welche zur Übertragung großer Kräfte und Momente geeignet ist. Die Krümmungsachse der Krümmung der Anlagefläche 53 verläuft senkrecht zur Verschlussachse VA und parallel zum Ausleger 32.

Fig. 5 zeigt eine Seitenansicht eines Verschlusses 42 einer Ausführungsform eines erfindungsgemäßen Gerüstriegels 1 im Verriegelungszustand. In Fig. 5 ist der Verschluss 42 aus Fig. 3 und 4 zu sehen, welcher sich in Fig. 5 jedoch im Verriegelungszustand befindet. Im Verriegelungszustand steht der Kopf 611 über das Gehäuse 5 des Verschlusses 42 vor. Die Krafteinleitungsfläche 64 des Verbindungselementes 6 steht nur noch geringfügig auf der dem Kopf 611 abgewandten Seite des Gehäuses 5 vor. Die Anlagefläche 72 des Spannelementes 7 liegt an der Spannfläche 521 an. Zur Überführung des Verschlusses 42 von dem in Fig. 3 gezeigten Öffnungszustand in den in Fig. 5 gezeigten Verriegelungszustand wurde das Spannelement 7 zusammen mit dem Verbindungselement 6 zum einen entlang der Verschlussachse linear von dem Verschluss 41 weg bewegt und zum anderen um die Verschlussachse VA in einer Richtung in der Darstellung von unten nach oben verdreht. Das Ende dieser Drehbewegung wird dadurch begrenzt, dass die nach oben gewandte Fläche des Spannelementes 7 an der rechtwinklig zur Spannfläche 521 orientierten, zum Ausleger 32 gewandten Begrenzungsfläche der Betätigungsöffnung 52 anschlägt. Durch dieses Anschlagen ist das Erreichen des Verriegelungszustands eindeutig definiert und haptisch fühlbar. Dadurch ist die Bedienung des Verschlusses 42 einfach und es ist sichergestellt, dass der Verschluss 42 mit einem Gerüstelement 20 verbunden ist. Der letzte Schritt bei der Überführung vom Öffnungszustand in den Verriegelungszustand ist eine lineare Bewegung oder Betätigung des Spannelementes 7 in die Spannelementaufnahme 63 hinein. Durch diese Bewegung wird eine Verspannung zwischen dem Kopf 611 und einem Gerüstelement 20 hergestellt. Details zu dieser Spannbewegung sind zu Fig. 6 und Fig. 9 beschrieben. An dem in der Darstellung nach unten gewandten Ende des Spannelementes 7 ist ein Sicherungsstift zu sehen, welche das Spannelement 7 senkrecht zur Spannelementebene SE durchdringt. Dieser Sicherungsstift bewirkt, dass das Spannelement 7 in dem in Fig. 3 gezeigten Öffnungszustand nicht aus der Spannelementaufnahme 63 herausfällt. Die in Fig. 3 zum Betrachter gewandte Seite des Spannelementes 7, an der die Krafteinleitungsfläche 731 angeordnet ist, weist ein größeres Gewicht auf als die Seite, in der der Sicherungsstift eingebracht ist. Dadurch bewirkt die auf das Spannelement 7 wirkende Schwerkraft in dem in Fig. 3 gezeigten Öffnungszustand, dass das Spannelement 7 zusammen mit dem Verbindungselement 6 automatisch in eine Drehlage gedreht wird, die dem Öffnungszustand enspricht. Durch die Schwerkraft auf der Seite des Spannelementes 7, auf der die Krafteinleitungsfläche 731 angeordnet ist, wird bewirkt, dass das Spannelement 7 an der zwischen Begrenzungsfläche 522 und Führungsfläche 521 angeordneten Seitenfläche der Betätigungsöffnung 52 anliegt, wodurch die Drehlage im Öffnungszustand eindeutig definiert ist. Durch diese automatische Ausrichtung von Spannelement 7 und Verbindungselementes 6 ist ein einfaches Einführen des Kopfes 611 in eine Verschlussöffnung 2011 eines Gerüstelementes 20 sichergestellt.

Fig. 6 zeigt eine geschnittene Seitenansicht eines Verschlusses 42 einer Ausführungsform eines erfindungsgemäßen Gerüstriegels 1 im Verriegelungszustand. In Fig. 6 ist eine Schnittansicht des in Fig. 5 dargestellten Verriegelungszustandes in einer Schnittebene dargestellt, welche durch die Spannelementebene SE verläuft. In dieser Schnittansicht ist das Zusammenwirken des Gehäuses 5, des Verbindungselementes 6 und des Spannelementes 7 gut zu erkennen. Die Keilfläche 71 des Spannelementes 7 liegt an der Winkelfläche 631 der Spannelementaufnahme 63 an. Die Anlagefläche 72 des Spannelementes liegt an der Spannfläche 521 des Gehäuses 5 an. Das Spannelement 7 steht um eine zweite Distanz D2 über das Verbindungselement 6 vor, wobei die zweite Distanz D2 zwischen der äußeren Oberfläche des zylindrischen Bereiches des Führungsbereiches 62 und der Krafteinleitungsfläche 731 definiert ist. Die zweite Distanz D2 ist kleiner als die in Fig. 3 dargestellte erste Distanz D1 und das Spannelement 7 ist im Verriegelungszustand tiefer in die Spannelementaufnahme 63 eingeschoben als im Öffnungszustand. Das Spannelement 7 ist in der Spannelementaufnahme 63 gleitend gelagert. Wird das Spannelement 7 ausgehend von dem in Fig. 6 dargestellten Zustand in eine Richtung senkrecht zur Verschlussachse VA weiter in das Verbindungselement 6 bewegt, so gleitet die Keilfläche 71 entlang der Winkelfläche 631. Dadurch wird eine Bewegung des Spannelementes 7 rechtwinklig zur Verschlussachse VA in eine Bewegung des Verbindungselementes 6 entlang Verschlussachse VA erzeugt. Dadurch kann durch Einleiten einer Kraft die Krafteinleitungsfläche 731, beispielsweise durch Hammerschläge, die Verspannung zwischen dem Verschluss 42 und einem Gerüstelement 20 erhöht bzw. eingestellt werden.

Fig. 7 zeigt eine teilweise geschnittene, perspektivische Ansicht einer Ausführungsform eines erfindungsgemäßen Gerüstabschnittes 100 mit einem Verschluss 42 im Öffnungszustand. Der Gerüstabschnitt 100 umfasst einen Gerüstriegel 1 nach der in Fig. 2 bis Fig. 6 dargestellten Ausführungsform. Weiterhin umfasst der Gerüstabschnitt 100 ein Gerüstelement 20, welches hier als Vertikalstiel ausgeführt ist. Das Gerüstelement 20 umfasst einen vertikal orientierten Stiel 201. Dieser Stiel 201 ist in der Darstellung geschnitten dargestellt, wodurch das Innere des Stiels 201 zu sehen ist. Der Stiel 201 wird hierdurch ein zylindrisches Rohr gebildet, welches in seinem Inneren über die gesamte Länge hohl ausgeführt ist. An dem Stiel 201 ist eine Riegelträgerschnittstelle 202 befestigt, welche hier als Verbindungsscheibe ausgeführt ist. Auch die Riegelträgerschnittstelle 202 ist geschnitten dargestellt. Die Verbindungsschnittstelle 21 des Gerüstriegels 1 ist in dem in Fig. 7 dargestellten Zustand bereits formschlüssig mit einer Öffnung in der Riegelträgerschnittstelle verbunden. Der Gerüstriegel 1 ist somit bereits über eine Verbindungsstelle mit den Gerüstelement 20 verbunden. Unterhalb der Riegelträgerschnittstelle 202 ist in der Wand des Stiels 201 eine Verschlussöffnung 2011 eingebracht, welche die Wand des Stiels 201 durchdringt. Die Verschlussöffnung 2011 ist als Langloch ausgeführt, wobei sich die längere Seite oder Öffnungsweite des Langlochs entlang der Längsrichtung des Stiels 201 erstreckt. In dem in Fig. 7 gezeigten Zustand, befindet sich der Verschluss 42 des Gerüstriegels 1 in dem hin Fig. 3 und Fig. 4 dargestellten Öffnungszustand. Es ist zu erkennen, dass der Kopf 611 so zur Verschlussöffnung 2011 positioniert und orientiert ist, dass dieser entlang der Verschlussachse VA durch die Verschlussöffnung 2011 in das hohle Innere des Stiels 201 eingeschoben werden kann. Ausgehend von dem in Fig. 7 dargestellten Öffnungszustand kann der Verschluss 42 in den in Fig. 8 dargestellten Verriegelungszustand überführt werden. Das Einbringen des Kopfes 611 in das Innere des Stiels 201 kann beispielsweise dadurch erfolgen, dass das Spannelement 7 von Hand entlang der Verschlussachse VA bewegt wird. Alternativ kann auch über die Krafteinleitungsfläche 64 eine entlang der Verschlussachse VA wirkende Kraft in das Verbindungselement 6 eingeleitet werden, beispielsweise durch Hammerschläge.

Fig. 8 zeigt eine teilweise geschnittene, perspektivische Ansicht einer Ausführungsform eines erfindungsgemäßen Gerüstabschnittes 100 mit einem Verschluss 42 im Verriegelungszustand. Fig. 8 zeigt den Gerüstabschnitt 100 aus Fig. 7, wobei der Verschluss 42 in den Verriegelungszustand überführt wurde. Der Kopf 611 befindet sich im hohlen Inneren des Stiels 201. Der Verschluss 42 und der Stiel 201 des Gerüstelementes 20 sind formschlüssig und kraftschlüssig miteinander verbunden. Der dargestellte Ausschnitt eines Gerüstabschnittes 100 umfasst somit nun zwei Verbindungsstellen zwischen dem Gerüstriegel 1 und dem Gerüstelement 20, eine erste Verbindungsstelle zwischen der Verbindungsschnittstelle 21 am Riegelträger 2 mit der Riegelträgerschnittstelle 202 sowie eine zweite Verbindungsstelle zwischen dem Verschluss 42 und der Verschlussöffnung 2011. Ausgehend von dem in Fig. 7 dargestellten Öffnungszustand wurde das Verbindungselement 6 zusammen mit dem Spannelement 7 zunächst entlang der Verschlussachse, linear auf das Gerüstelement 20 zu bewegt, wobei der Kopf 611 durch die Verschlussöffnung 2011 in den Stiel 201 eingedrungen ist. Anschließend oder zusammen mit dieser linearen Bewegung wurden Verbindungselement 6 und Spannelement 7 um 90° um die Verschlussachse VA gedreht. Zum Ende der Drehbewegung ist die Kopfebene KE im Wesentlichen senkrecht zum Ausleger 32 orientiert. In einem letzten Schritt wurde das Spannelement 7 betätigt, indem es weiter in das Verschlusselement 6 eingeschoben wurde. Durch dieses Einschieben des Spannelementes 7 wurde das Verbindungselement 6 wieder ein Stück vom Gerüstelement 20 entlang der Verschlussachse VA weg bewegt. Durch diese Betätigung des Spannelementes 7 liegt im dargestellten Zustand die gekrümmte Anlagefläche 6111 des Kopfes 611 im Inneren des Stiels 2011 benachbart zur Verschlussöffnung 2011 an. Dieser Zustand ist geschnitten in einer Draufsicht in Fig. 9 zu sehen.

Fig. 9 zeigt eine geschnittene Draufsicht auf die Verbindung zwischen einem Stiel 201 und einem Verschluss 42 im Verriegelungszustand. In Fig. 9 ist der Verriegelungszustand aus Fig. 8 zu sehen. Die Ansicht zeigt eine Schnittdarstellung in der Kopfebene KE. Der Kopf 611 befindet sich im Inneren des Stiels 201 und liegt mit seiner gekrümmten Anlagefläche 6111 im Inneren an der Wand des Stiels 201 an. Der Krümmungsradius der Anlagefläche 6111 ist identisch zum Krümmungsradius der Innenwand des Stiels 201 ausgeführt, wodurch eine großflächige Anlagefläche zwischen Verschluss 42 und Gerüstelement 20 bereitgestellt wird. Im dargestellten Zustand sind der Verschluss 42 und der Stiel 201 miteinander verspannt. Diese Verspannung wurde durch Betätigung des Spannelementes 7 erzeugt. Im dargestellten Zustand besteht aufgrund der Verspannung ein geschlossener Kraftfluss zwischen Verschluss 42 und Gerüstelement 20. Dieser Kraftfluss erstreckt sich vom Kopf 611 zunächst über die Anlagefläche 611 zur Innenwand des Stiels 201. Anschließend erstreckt sich der Kraftfluss weiter von der Außenwand des Stiels 201 über die Anlagefläche 53 des Gehäuses 5 in das Gehäuse 5. Die Anlagefläche 53 ist in der Schnittebene in Fig. 9 nicht zu sehen. Vom Gehäuse 5 aus erstreckt sich der Kraftfluss weiter über die Spannfläche 521 und die daran anliegende Anlagefläche 72 in das Spannelement 7. Vom Spannelement 7 verläuft der Kraftfluss weiter über die Keilfläche 71 und die daran anliegende Winkelfläche 631 zum Verbindungselement 6. Schließlich ist der Kraftfluss innerhalb des Verbindungselementes 6 geschlossen und verläuft weiter durch den Führungsbereich 62 und den Schaft 612 zurück zum Kopf 611. Die dargestellte form- und kraftschlüssige Verbindung im Verriegelungszustand zwischen dem Verschluss 42 und dem Stiel 201 ist stabil und zuverlässig und ermöglicht die Übertragung von Kräften und Momenten. Zur Lösung des Verschlusses für 42 vom Stiel 201 sind die zu Fig. 7 bis Fig. 9 beschriebenen Schritte zur Herstellung dieser Verbindung einfach in umgekehrter Reihenfolge durchzuführen.

### Bezugszeichenliste:

- 1: Gerüstriegel
- 2: Riegelträger
- 21: Verbindungsschnittstelle
- 31, 32: Ausleger
- 41, 42: Verschluss
- 5: Gehäuse
- 51: Gehäusewand
- 52: Betätigungsöffnung
- 521: Spannfläche
- 522: Begrenzungsfläche
- 523: Kulissenbereich
- 5231: Führungsfläche
- 53: Anlegefläche
- 54: Öffnung
- 6: Verbindungselement
- 61: Haltebereich
- 611: Kopf
- 6111: Anlegefläche
- 612: Schaft
- 62: Führungsbereich
- 63: Spannelementaufnahme
- 631: Winkelfläche
- 64: Krafteinleitungsfläche
- 7: Spannelement
- 71: Keilfläche
- 72: Anlegefläche
- 73: Krafteinleitungsbereich
- 731: Krafteinleitungsfläche
- 20: Gerüstelement
- 201: Stiel
- 2011: Verschlussöffnung
- 202: Riegelträgerschnittstelle
- AA1, AA2: Auslegerachse
- D1: erste Distanz
- D2: zweite Distanz
- H: Horizontalriegel
- LA: Längsachse
- VA: Verschlussachse
- SE: Spannelementebene
- KE: Kopfebene
- W: Winkel

## Patentansprüche

1. Gerüstriegel (1), insbesondere zum horizontal orientierten Einbau in einen Gerüstabschnitt (100), umfassend
- zumindest einen Riegelträger (2), welcher stabförmig ausgeführt ist und sich in Richtung einer Längsachse (LA) erstreckt, wobei der Riegelträger (2) in Richtung der Längsachse (LA) zwei einander gegenüberliegende Enden aufweist und an jedem dieser beiden Enden eine Verbindungsschnittstelle (21) angeordnet ist, welche zur Verbindung mit einem Gerüstelement (20) vorgesehen ist,
- zumindest zwei Ausleger (31, 32), welche sich jeweils entlang einer Auslegerachse (AA1, AA2) erstrecken, wobei die Auslegerachsen (AA1, AA2) jeweils in einem Winkel (W) zwischen 1° und 89° zur Längsachse (LA) orientiert sind und wobei die Ausleger (31, 32) jeweils in Richtung ihrer Auslegerachse (AA1, AA2) zwei einander gegenüberliegende Enden aufweisen, wobei eines dieser Enden jedes Auslegers (31, 32) mit dem Riegelträger (2) verbunden ist,
**dadurch gekennzeichnet, dass**
der Gerüstriegel (1) zumindest zwei Verschlüsse (41, 42), von denen jeweils einer an dem Ende eines Auslegers (31, 32) angeordnet ist, welches der Verbindung dieses Auslegers (31, 32) mit dem Riegelträger (2) gegenüberliegt, aufweist,
wobei jeder Verschluss (41, 42) ein fest mit dem Ausleger (31, 32) verbundenes Gehäuse (5) aufweist und jeder Verschluss (41, 42) weiterhin ein zu dem Gehäuse (5) beweglich gelagertes Verbindungselement (6) aufweist,
wobei das Verbindungselement (6) zumindest einen Haltebereich (61) und einen Führungsbereich (62) aufweist, wobei der Haltebereich (61) und der Führungsbereich (62) in der Richtung einer Verschlussachse (VA) nebeneinander und aneinander angrenzend angeordnet sind, wobei der Haltebereich (61) einen Kopf (611) und einen Schaft (612) aufweisen, welche in der Richtung der Verschlussachse (VA) nebeneinander und aneinander angrenzend angeordnet sind und der Kopf (611) zumindest bereichsweise in radialer Richtung zur Verschlussachse (VA) über den Schaft (612) vorsteht, wobei der Kopf (611) zur Herstellung einer formschlüssigen Verbindung mit einem Gerüstelement (20) vorgesehen ist und wobei jeder Verschluss (41, 42) zumindest ein Spannelement (7) aufweist, welches mit dem Gehäuse (5) und dem Verbindungselement (6) beweglich, insbesondere formschlüssig, verbunden ist, wobei eine Bewegung des Spannelementes (7) relativ zum Gehäuse (5) das Verbindungselement (6) in Richtung der Verschlussachse (VA) relativ zum Gehäuse (5) bewegt, wobei die zwei Verbindungsschnittstellen (21) des zumindest einen Riegelträgers (2) und die zwei Verschlüsse (41, 42) zusammen zumindest vier Verbindungsstellen zur Verbindung des Gerüstriegels (1) mit weiteren Gerüstelementen (20) bereitstellen und sich die Verbindungsschnittstellen (21) in Form und Größe von den Verschlüssen (41, 42) unterscheiden.

2. Gerüstriegel (1) nach Anspruch 1, **dadurch gekennzeichnet, dass** die Verschlussachse (VA) parallel zur Längsachse (LA) orientiert ist und/oder der Führungsbereich (62) zumindest bereichsweise zylindrisch ausgeführt ist und im Gehäuse (5) zumindest bereichsweise eine zylindrische Ausnehmung eingebracht ist, wobei der Innendurchmesser der zylindrischen Ausnehmung größer als der Außendurchmesser des zylindrischen Bereiches des Führungsbereiches (62) ist und zwischen der zylindrischen Ausnehmung und dem Führungsbereich (62) eine Spielpassung besteht und das Verbindungselement (6) zumindest bereichsweise innerhalb des Gehäuses (5) angeordnet ist.

3. Gerüstriegel (1) nach einem der vorhergehenden Ansprüche, **dadurch gekennzeichnet, dass** das im Führungsbereich (62) eine Spannelementaufnahme (63) eingebracht ist, welche als Öffnung ausgebildet ist, die den Führungsbereich (62) in radialer Richtung zur Verschlussachse (VA) durchdringt.

4. Gerüstriegel (1) nach einem der vorhergehenden Ansprüche, **dadurch gekennzeichnet, dass** der Kopf (611) in seinem über den Schaft (612) vorstehenden Bereich eine gekrümmte Anlagefläche (6111) aufweist, welche zum Führungsbereich (62) hinweist und das Verbindungselement (6) eine gedachte Kopfebene (KE) aufweist, welche sich entlang der Verschlussachse (VA) erstreckt und welche den Führungsbereich (62) halbiert, wobei der Kopf (611) in der Kopfebene (KE) beidseitig zur Verschlussachse (VA) über den Schaft (612) vorsteht und der Kopf (611) symmetrisch zur Kopfebene (KE) geformt ist.

5. Gerüstriegel (1) nach einem der Ansprüche 3 oder 4, **dadurch gekennzeichnet, dass** die Spannelementaufnahme (63) zumindest eine Winkelfläche (631) aufweist, welche in einem Winkel zwischen 0,5° und 45° zu einer Ebene ausgerichtet ist, welche senkrecht zur Verschlussachse (VA) orientiert ist und das Spannelement (7) eine gedachte Spannelementebene (SE) umfasst, wobei die Spannelementebene (SE) das Spannelement (7) durchdringt, insbesondere wobei das Spannelement (7) in Dickenrichtung symmetrisch zur Spannelementebene (SE) aufgebaut ist, wobei das Spannelement (7) in einer Draufsicht auf die Spannelementebene (SE) zumindest bereichsweise keilförmig geformt ist und eine Keilfläche (71) aufweist, welche das Spannelement (7) senkrecht zur Spannelementebene (SE) begrenzt und das Spannelement (7) weiterhin eine Anlagefläche (72) aufweist, welche das Spannelement (7) senkrecht zur Spannelementebene (SE) auf einer der Keilfläche (71) gegenüberliegenden Seite begrenzt, wobei die Keilfläche (71) zur Anlagefläche (72) in einem Winkel zwischen 0,5° und 45° orientiert ist.

6. Gerüstriegel (1) nach einem der vorhergehenden Ansprüche, **dadurch gekennzeichnet, dass** das Gehäuse (5) in seiner Gehäusewand (51), welche die zumindest bereichsweise zylindrisch ausgeführte Ausnehmung begrenzt, eine Betätigungsöffnung (52) aufweist, welche die Gehäusewand (51) durchdringt, wobei die Betätigungsöffnung (52) zumindest eine Spannfläche (521) aufweist, welche senkrecht zur Verschlussachse (VA) orientiert ist und welche die Betätigungsöffnung (52) in Richtung der Verschlussachse (VA) auf der dem zweiten Verschluss (41, 42) abgewandten Seite begrenzt.

7. Gerüstriegel (1) nach Anspruch 6, **dadurch gekennzeichnet, dass** die Betätigungsöffnung (52) einen Kulissenbereich (523) aufweist, der Teil der Begrenzung der Betätigungsöffnung (52) ist, wobei der Kulissenbereich (523) die Spannfläche (521) mit der Begrenzungsfläche (522) verbindet, wobei der Kulissenbereich (523) zumindest eine Führungsfläche (5231) umfasst, welche in einem Winkel zwischen 1° und 89° zur Spannfläche (521) orientiert ist, wobei die Führungsfläche (5231) auf der Seite der Betätigungsöffnung (52) angeordnet ist, welche der Verbindung des Gehäuses (5) mit dem Ausleger (31, 32) gegenüberliegt.

8. Gerüstriegel (1) nach einem der Ansprüche 6 oder 7, **dadurch gekennzeichnet, dass** das Spannelement (7) zumindest bereichsweise in das Gehäuse (5) und das Verbindungselement (6) eingebracht ist, wobei das Spannelement (7) die Betätigungsöffnung (52) und die Spannelementaufnahme (63) durchdringt und die Keilfläche (71) parallel zur Winkelfläche (631) und die Anlagefläche (72) parallel zur Spannfläche (521) ausgerichtet ist.

9. Gerüstriegel (1) nach einem der Ansprüche 4 bis 8, **dadurch gekennzeichnet, dass** ein Öffnungszustand des Verschlusses (41, 42) vorgesehen ist, in dem sich der Kopf (611) im Inneren des Gehäuses (5) befindet, die Kopfebene (KE) im Wesentlichen parallel zum Ausleger (31, 32) orientiert ist und das Spannelement (7) um eine erste Distanz (D1) über das Verbindungselement (6) vorsteht, wobei die erste Distanz (D1) die Distanz zwischen der äußeren Oberfläche des zylindrischen Bereiches des Führungsbereiches (62) und der Krafteinleitungsfläche (731) ist und ein Verriegelungszustand des Verschlusses (41, 42) vorgesehen ist, in dem der Kopf (611) über das Gehäuse (5) vorsteht, die Kopfebene (KE) im Wesentlichen senkrecht zum Ausleger (31, 32) orientiert ist, die Keilfläche (71) an der Winkelfläche (631) anliegt, die Anlagefläche (72) an der Spannfläche (521) anliegt und das Spannelement (7) um eine zweite Distanz (D2) über das Verbindungselement (6) vorsteht, wobei die zweite Distanz (D2) die Distanz zwischen der äußeren Oberfläche des zylindrischen Bereiches des Führungsbereiches (62) und der Krafteinleitungsfläche (731) ist, wobei die zweite Distanz (D2) kleiner als die erste Distanz (D1) ist.

10. Gerüstabschnitt (100) umfassend zumindest einen Gerüstriegel (1) nach einem der vorhergehenden Ansprüche, weiter umfassend
zumindest ein Gerüstelement (20) mit einem Stiel (201) welcher in seinem Inneren zumindest bereichsweise hohl ausgeführt ist und mit zumindest einer Riegelträgerschnittstelle (202), welche am Stiel (201) befestigt ist, wobei in den Stiel (201) in einem Bereich, in dem dieser hohl ausgeführt ist, eine Verschlussöffnung (2011) eingebracht ist, welche die Wand des Stiels (201) durchdringt,
wobei die Verbindungsschnittstelle (21) des Gerüstriegels (1) mit der Riegelträgerschnittstelle (202) des Gerüstelementes (20) formschlüssig verbunden ist und der Verschluss (41, 42) des Gerüstriegels (1) formschlüssig mit der Verschlussöffnung (2011) des Gerüstelementes (20) verbunden ist, wobei diese beiden Verbindungstellen beabstandet zueinander, insbesondere beabstandet zueinander in Längsrichtung des Stiels (201), angeordnet sind.

11. Gerüstabschnitt (100) nach einem der vorhergehenden Ansprüche, **dadurch gekennzeichnet, dass** der Kopf (611) bereichsweise durch die Verschlussöffnung (2011) in einen hohlen inneren Bereich des Stiels (201) eingebracht ist und die Anlagefläche (6111) des Kopfes (611) zumindest bereichsweise im Inneren des Stiels (201) an dessen Wand benachbart zur Verschlussöffnung (2011) anliegt und bei der Verbindung zwischen dem Verschluss (41, 42) und dem Stiel (201) im Verriegelungszustand ein in sich geschlossener Kraftfluss vorliegt, welcher vom Kopf (611) über dessen Anlagefläche (6111) zur Wand des Stiels (201), von der Wand des Stiels (201) zum daran anliegenden Gehäuse (5), von den Gehäuse (5) über dessen Spannfläche (521) und die Anlagefläche (72) zum Spannelement (7), vom Spannelement (7) über dessen Keilfläche (71) und die Winkelfläche (631) zum Verbindungselement (6) und innerhalb des Verbindungselementes (6) wieder zurück zum Kopf (611) verläuft.

12. Verfahren zum Aufbau eines Gerüstabschnittes (100) nach einem der vorhergehenden Ansprüche 10 oder 11, umfassend die Schritte
A) Überführen zumindest eines Verschlusses (41, 42) des Gerüstriegels (1) in den Öffnungszustand, wobei die Kopfebene (KE) parallel zum Ausleger (31, 32) ausgerichtet wird,
B) Verbinden einer Verbindungsschnittstelle (21) des Riegelträgers (2) mit einer Riegelträgerschnittstelle (202) des Gerüstelementes (20),
C) Überführen des Verschlusses (41, 42) des Gerüstriegels (1) in den Verriegelungszustand, wobei das Verbindungselement (6) entlang der Verschlussachse (VA) linear auf das Gerüstelement (20) zu bewegt wird und der Kopf (611) bereichsweise durch die Verschlussöffnung (2011) in das Innere des Stiels (201) eindringt und anschließend das Verbindungselement (6) um die Verschlussachse (VA) gedreht wird, solange bis die Kopfebene (KE) im Wesentlichen senkrecht zum Ausleger (31, 32) orientiert ist und anschließend das Spannelement (7) betätigt wird, wobei das Verbindungselement (6) entlang der Verschlussachse (VA) linear von dem Gerüstelement (20) weg bewegt wird bis die Anlagefläche (6111) des Kopfes (611) zumindest bereichsweise im Inneren des Stiels (201) an dessen Wand anliegt.

13. Verfahren nach Anspruch 12, **dadurch gekennzeichnet, dass** in Verfahrensschritt C) das Spannelement (7) entlang der Führungsfläche (5231) der Betätigungsöffnung (52) des Gehäuses (5) gleitet, wodurch durch eine lineare Bewegung des Verbindungselementes (6) und/oder des Spannelementes (7) eine Rotationsbewegung des Verbindungselementes (6) um die Verschlussachse (VA) erzeugt wird.

## Claims

1. A scaffold transom (1), particularly for the horizontally oriented installation in a scaffold section (100), comprising:
- at least one transom support (2), which is rod-shaped and extends in the direction of a longitudinal axis (LA), wherein the transom support (2) has two opposing ends in the direction of the longitudinal axis (LA), and a connection interface (21) is located at each of these two ends which connection interface (21) is provided for the connection to a scaffold element (20),
- at least two brackets (31, 32) which each extend along a bracket axis (AA1, AA2), wherein the bracket axes (AA1, AA2) are respectively oriented at an angle (W) of 1° to 89° to the longitudinal axis (LA), and wherein the brackets (31, 32) respectively have two opposing ends in the direction of their bracket axis (AA1, AA2), wherein one of these ends of each bracket (31, 32) is connected to the transom support (2),
**characterised in that**
the scaffold transom (1) comprises at least two closures (41, 42), respectively one of which is located at the end of a bracket (31, 32) opposite of the connection of said bracket (31, 32) to the transom support (2),
wherein each closure (41, 42) comprises a housing (5) fixedly connected to the bracket (31, 32), and each closure (41, 42) further comprises a connecting element (6) supported so that it is movable with respect to the housing (5),
wherein the connecting element (6) comprises at least one retaining portion (61) and one guide portion (62), wherein the retaining portion (61) and the guide portion (62) are arranged adjacent to each other and adjoining one another in the direction of a closure axis (VA), wherein the retaining portion (61) comprises a head (611) and a shaft (612) which are disposed adjacent to each other and adjoining one another in the direction of the closure axis (VA), and the head (611), at least in sections, projects beyond the shaft (612) in the radial direction to the closure axis (VA), wherein the head (611) is provided for establishing a positive connection to a scaffold element (20), and wherein each closure (41, 42) comprises at least one clamping element (7) which is movably, particularly positively connected to the housing (5) and the connecting element (6), wherein a movement of the clamping element (7) relative to the housing (5) moves the connecting element (6) relative to the housing (5) in the direction of the closure axis (VA), wherein the two connection interfaces (21) of the at least one transom support (2) and the two closures (41, 42) together provide for at least four connection points for the connection of the scaffold transom (1) to other scaffold elements (20), and the connection interfaces (21) are different from the closures (41, 42) with respect to the shape and the size.

2. The scaffold transom (1) according to claim 1, **characterised in that** the closure axis (VA) is oriented parallel to the longitudinal axis (LA), and/or the guide portion (62), at least in sections, has a cylindrical configuration, and in the housing (5), at least in sections, a cylindrical cavity is incorporated, wherein the inner diameter of the cylindrical cavity is larger than the outer diameter of the cylindrical section of the guide portion (62), and a clearance fit prevails between the cylindrical cavity and the guide portion (62), and the connecting element (6), at least in sections, is positioned inside the housing (5).

3. The scaffold transom (1) according to one of the preceding claims, **characterised in that** a clamping element receptacle (63) implemented as an opening extending through the guide portion (62) in the radial direction to the closure axis (VA) is incorporated in the guide portion (62).

4. The scaffold transom (1) according to one of the preceding claims, **characterised in that** the head (611) comprises a curved contact surface (6111) facing the guide portion (62) in its portion projecting beyond the shaft (612), and
the connecting element (6) has an imaginary head plane (KE) which extends along the closure axis (VA) and bisects the guide portion (62), wherein the head (611) projects beyond the shaft (612) on both sides of the closure axis (VA) in the head plane (KE), and the head (611) is formed so that it is symmetrical to the head plane (KE).

5. The scaffold transom (1) according to one of the claims 3 or 4, **characterised in that** the clamping element receptacle (63) comprises at least one angled face (631) which is oriented at an angle of 0.5° to 45° to a plane which is oriented perpendicular to the closure axis (VA), and the clamping element (7) comprises an imaginary clamping element plane (SE), wherein the clamping element plane (SE) extends through the clamping element (7), wherein the clamping element (7) is particularly designed so that it is symmetrical to the clamping element plane (SE) in the direction of the thickness, wherein the clamping element (7), at least in sections, has a wedge shape in a plan view of the clamping element plane (SE) and comprises a wedge-shaped surface (71) defining the clamping element (7) perpendicular to the clamping element plane (SE), and the clamping element (7) further comprises a contact surface (72) defining the clamping element (7) perpendicular to the clamping element plane (SE) on a side opposite of the wedge-shaped surface (71), wherein the wedge-shaped surface (71) is oriented at an angle of 0.5° to 45° to the contact surface (72).

6. The scaffold transom (1) according to one of the preceding claims, **characterised in that** the housing (5), in its housing wall (51) defining the, at least in sections, cylindrically implemented cavity, comprises an operating opening (52) extending through the housing wall (51), wherein the operating opening (52) comprises at least one clamping surface (521) which is oriented perpendicular to the closure axis (VA) and which defines the operating opening (52) in the direction of the closure axis (VA) on the side facing away from the second closure (41, 42).

7. The scaffold transom (1) according to claim 6, **characterised in that** the operating opening (52) comprises a slide portion (523) which is part of the boundary of the operating opening (52), wherein the slide portion (523) connects the clamping surface (521) to the boundary surface (522), wherein the slide portion (523) comprises at least one guide surface (5231) which is oriented at an angle of 1° to 89° to the clamping surface (521), wherein the guide surface (5231) is disposed on the side of the operating opening (52) disposed opposite of the connection of the housing (5) to the bracket (31, 32).

8. The scaffold transom (1) according to one of the claims 6 or 7, **characterised in that** the clamping element (7), at least in sections, is introduced into the housing (5) and the connecting element (6), wherein the clamping element (7) extends through the operating opening (52) and the clamping element receptacle (63), and the wedge-shaped surface (71) is oriented parallel to the angled face (631), and the contact surface (72) is oriented parallel to the clamping surface (521).

9. The scaffold transom (1) according to one of the claims 4 to 8, **characterised in that** an opened state of the closure (41, 42) is provided in which the head (611) is disposed in the interior of the housing (5), the head plane (KE) is oriented substantially parallel to the bracket (31, 32), and the clamping element (7) projects beyond the connecting element (6) by a first distance (D1), wherein the first distance (D1) is the distance between the outer surface of the cylindrical section of the guide portion (62) and the force introduction surface (731), and a locked state of the closure (41, 42) is provided in which the head (611) projects beyond the housing (5), the head plane (KE) is oriented substantially perpendicular to the bracket (31, 32), the wedge-shaped surface (71) abuts on the angled face (631), the contact surface (72) abuts on the clamping surface (521), and the clamping element (7) projects beyond the connecting element (6) by a second distance (D2), wherein the second distance (D2) is the distance between the outer surface of the cylindrical section of the guide portion (62) and the force introduction surface (731), wherein the second distance (D2) is smaller than the first distance (D1).

10. A scaffold section (100) comprising at least one scaffold transom (1) according to one of the preceding claims, further comprising
at least one scaffold element (20) comprising a post (201) which, at least in sections, is designed so that it is hollow is in its interior, and at least one transom support interface (202) which is attached to the post (201), wherein a closure opening (2011) extending through the wall of the post (201) is incorporated in the post (201) in a portion in which it has a hollow configuration,
wherein the connection interface (21) of the scaffold transom (1) is positively connected to the transom support interface (202) of the scaffold element (20), and the closure (41, 42) of the scaffold transom (1) is positively connected to the closure opening (2011) of the scaffold element (20), wherein these two connection points are disposed at a distance to each other, particularly at a distance to each other in the longitudinal direction of the post (201).

11. The scaffold section (100) according to one of the preceding claims, **characterised in that** the head (611), in sections, is introduced into a hollow inner portion of the post (201) through the closure opening (2011), and the contact surface (6111) of the head (611), at least in sections, abuts on the wall in the interior of the post (201) adjacent to the closure opening (2011), and, in the connection of the closure (41, 42) to the post (201), a self-contained flow of forces prevails in the locked state which proceeds from the head (611) through its contact surface (6111) to the wall of the post (201), from the wall of the post (201) to the housing (5) abutting thereon, from the housing (5) through its clamping surface (521) and the contact surface (72) to the clamping element (7), from the clamping element (7) through its wedge-shaped surface (71) and the angled face (631) to the connecting element (6), and within the connecting element (6) back to the head (611).

12. A method for constructing a scaffold section (100) according to one of the preceding claims 10 or 11, comprising the steps of
A) transferring at least of a closure (41, 42) of the scaffold transom (1) into the opened state, wherein the head plane (KE) is oriented parallel to the brackets (31, 32),
B) connecting a connection interface (21) of the transom support (2) to a transom support interface (202) of the scaffold element (20),
C) transferring the closure (41, 42) of the scaffold transom (1) into the locked state, wherein the connecting element (6) is linearly moved towards the scaffold element (20) along the closure axis (VA), and the head (611), in sections, enters the interior of the post (201) through the closure opening (2011), and the connecting element (6) is then rotated about the closure axis (VA) until the head plane (KE) is oriented substantially perpendicular to the bracket (31, 32), and then the clamping element (7) is operated, wherein the connecting element (6) is linearly moved away from the scaffold element (20) along the closure axis (VA) until the contact surface (6111) of the head (611), at least in sections, abuts on the wall in the interior of the post (201).

13. The method according to claim 12, **characterised in that,** in process step C), the clamping element (7) slides along the guide surface (5231) of the operating opening (52) of the housing (5) whereby a rotational movement of the connecting element (6) about the closure axis (VA) is produced by a linear movement of the connecting element (6) and/or of the clamping element (7).

## Revendications

1. Traverse d'échafaudage (1), notamment pour l'intégration à orientation horizontale dans une section d'échafaudage (100), comprenant
- au moins un support de traverse (2) exécuté en barrette et s'étendant dans la direction d'un axe longitudinal (LA), le support de traverse (2) présentant dans la direction de l'axe longitudinal (LA) deux extrémités opposées et une interface de jonction (21) étant disposées à chacune desdites deux extrémités et prévues pour le raccordement à un élément de l'échafaudage (20),
- au moins deux cantilevers (31, 32) qui s'étendent le long un axe de cantilever (AA1, AA2), les axes de cantilever (AA1, AA2) étant chacun orienté dans un angle (W) entre 1° et 89° par rapport à l'axe longitudinal (LA) et les cantilevers (31, 32) présentant chacun dans la direction de leur axe de cantilever (AA1, AA2) deux extrémités opposées, l'une desdites extrémités de chaque cantilever (31, 32) étant raccordée au support de traverse (2),
**caractérisé en ce que**
la traverse d'échafaudage (1) présente au moins deux fermetures (41, 42) dont l'une est respectivement disposée à l'extrémité d'un cantilever (31, 32) opposée au raccordement dudit cantilever (31, 32) avec le support de traverse (2),
chacune des fermetures (41, 42) présentant un boîtier (5) solidarisé avec le cantilever (31, 32) et chacune des fermetures (41, 42) présentant en outre un élément de raccordement (6) disposé de manière amovible par rapport au boîtier (5),
l'élément de raccordement (6) présentant au moins une zone de maintien (61) et une zone de guidage (62), la zone de maintien (61) et la zone de guidage (62) étant disposées de manière juxtaposée et adjacente l'une à l'autre dans la direction d'un axe de fermeture (VA), la zone de maintien (61) présentant une tête (611) et un fût (612), qui sont disposés de manière juxtaposée et adjacente l'un à l'autre dans la direction de l'axe de fermeture (VA) et la tête (611) saillant au moins par endroits dans la direction radiale par rapport à l'axe de fermeture (VA) au-delà le fût (612), la tête (611) étant prévue pour la réalisation d'un raccordement à engagement positif à un élément d'échafaudage (20) et chaque fermeture (41, 42) présentant au moins un élément de serrage (7), qui est raccordé au boîtier (5) et à l'élément de raccordement (6) de manière amovible, notamment à engagement positif, un mouvement de l'élément de serrage (7) relativement au boîtier (5) déplaçant l'élément de raccordement (6) dans la direction de l'axe de fermeture (VA) relativement au boîtier (5), les deux interfaces de raccordement (21) de l'au moins un support de traverse (2) et les deux fermetures (41, 42) ensemble prévoient au moins quatre points de raccordement pour raccorder la traverse d'échafaudage (1) à d'autres éléments d'échafaudage (20) et les points de raccordement (21) se différencient des fermetures (41, 42) au niveau de leurs formes et de leurs dimensions.

2. Traverse d'échafaudage (1) selon la revendication 1, **caractérisée en ce que** l'axe de fermeture (VA) est orienté parallèlement à l'axe longitudinal (LA) et/ou la zone de guidage (62) est exécutée au moins par endroits en cylindre et au moins par endroits un évidement cylindrique est prévu dans le boîtier (5), le diamètre intérieur de l'évidement cylindrique étant plus grand que le diamètre extérieur de la zone cylindrique de la zone de guidage (62) et un ajustement avec jeu étant prévu entre l'évidement cylindrique et la zone de guidage (62) et l'élément de raccordement (6) étant disposé au moins par endroits à l'intérieur du boîtier (5).

3. Traverse d'échafaudage (1) selon l'une des revendications précédentes, **caractérisée en ce qu'**un logement d'élément de serrage (63) est intégré dans la zone de guidage (62) et est exécuté en ouverture qui traverse la zone de guidage (62) dans la direction radiale vers l'axe de fermeture (VA).

4. Traverse d'échafaudage (1) selon l'une des revendications précédents, **caractérisée en ce que** la tête (611) présente, dans sa zone saillant au-delà du fût (612) une surface de contact courbée (6111), qui est orientée vers la zone de guidage (62) et l'élément de raccordement (6) présente un plan de tête (KE) imaginé, qui s'étend le long de l'axe de fermeture (VA) et qui divise en deux la zone de guidage (62), la tête (611) saillant au-delà le fût (612) dans le plan de tête (KE) sur les deux côtés de l'axe de fermeture (VA) et la tête (611) étant formée symétriquement vers le plan de tête (KE).

5. Traverse d'échafaudage (1) selon l'une des revendications 3 ou 4, **caractérisée en ce que** le logement d'éléments de serrage (63) présente au moins une surface d'angle (631), qui est orientée dans un angle entre 0,5° et 45° par rapport à un plan, qui est orienté perpendiculairement par rapport à l'axe de fermeture (VA) et l'élément de serrage (7) traverse un plan imaginé d'élément de serrage (SE), le plan d'élément de serrage (SE) pénétrant l'élément de serrage (7), l'élément de serrage (7) étant notamment construit symétriquement dans le sens de l'épaisseur par rapport au plan d'élément de serrage (SE), l'élément de serrage (7) étant, sur une vue en plan sur le plan d'élément de serrage (SE) formé en clavette au moins par endroits et présentant une surface de clavette (71) , qui délimite l'élément de serrage (7) perpendiculairement par rapport au plan d'élément de serrage (SE) et l'élément de serrage (7) présentant par ailleurs une surface de contact (72), qui délimite l'élément de serrage (7) perpendiculairement par rapport au plan d'élément de serrage (SE) sur un côté opposé à la surface de clavette (71), la surface de clavette (71) étant orientée par rapport à la surface de contact (72) dans un angle entre 0,5° et 45°.

6. Traverse d'échafaudage (1) selon l'une des revendications précédentes, **caractérisée en ce que** le boîtier (5) présente dans sa paroi de boîtier (51) qui délimite l'évidement exécuté au moins par endroits en cylindre, une ouverture d'actionnement (52), qui traverse la paroi de boîtier (51), l'ouverture d'actionnement (52) présentant au moins une surface de serrage (521), qui est orientée perpendiculairement par rapport à l'axe de fermeture (VA) et qui délimite l'ouverture d'actionnement (52) dans la direction de l'axe de fermeture (VA) sur le côté détourné de la deuxième fermeture (41, 42).

7. Traverse d'échafaudage (1) selon la revendication 6, **caractérisé en ce que** l'ouverture d'actionnement (52) présente une zone de coulisse (523), qui fait partie de la délimitation de l'ouverture d'actionnement (52), la zone de coulisse (523) raccordant la surface de serrage (521) à la surface de délimitation (522), la zone de coulisse (523) comprenant au moins une surface de guidage (5231), qui est orientée dans un angle entre 1° et 89° par rapport à la surface de serrage (521), la surface de guidage (5231) étant disposée sur le côté de l'ouverture d'actionnement (52), opposée au raccordement du boîtier (5) au cantilever (31, 32).

8. Traverse d'échafaudage (1) selon l'une des revendications 6 ou 7, **caractérisée en ce que** l'élément de serrage (7) est intégré dans le boîtier (5) et l'élément de raccordement (6) au moins par endroits, l'élément de serrage (7) traversant l'ouverture d'actionnement (52) et le logement d'élément de serrage (63) et la surface de clavette (71) étant orientée parallèlement par rapport à la surface d'angle (631) et la surface de contact (72) étant orientée parallèlement à la surface de serrage (521).

9. Traverse d'échafaudage (1) selon l'une des revendications 4 à 8, **caractérisée en ce qu'** un état d'ouverture de la fermeture (41, 42) est prévu, dans lequel la tête (611) est disposée à l'intérieur du boîtier (5), le plan de tête (KE) est essentiellement orienté en parallèle par rapport au cantilever (31, 32) et l'élément de serrage (7) saillit d'une première distance (D1) au-delà l'élément de raccordement (6), la première distance (D1) étant la distance entre la surface extérieure de la zone cylindrique de la zone de guidage (62) et de la surface d'introduction de force (731) et un état de verrouillage de la fermeture (41, 42) est prévu, dans lequel la tête (611) saillit au-delà du boîtier (5), le plan de tête (KE) est essentiellement orienté perpendiculairement (313, 32) par rapport au cantilever, la surface de clavette (71) adhère à la surface d'angle (631), la surface de contact (72) adhère à la surface de serrage (521) et l'élément de serrage (7) saillit d'une deuxième distance (D2) au-delà de l'élément de raccordement (6), la deuxième distance (D2) étant la distance entre la surface extérieure de la zone cylindrique de la zone de guidage (62) et la surface d'introduction de force (731), la deuxième distance (D2) étant plus petite que la première distance (D1).

10. Section d'échafaudage (100), comprenant au moins une traverse d'échafaudage (1) selon l'une des revendications précédentes, comprenant par ailleurs
au moins un élément d'échafaudage (20) ayant un manche (210) dont l'intérieur est au moins par endroits exécuté pour être creux et ayant au moins une interface de support de traverse (202) qui est fixée au manche (201), une ouverture de fermeture (2011) qui traverse la paroi du manche (201) étant introduite dans le manche (201) dans une zone dans laquelle ce dernier est exécuté pour être creux,
l'interface de raccordement (21) de la traverse d'échafaudage (1) étant raccordée à engagement positif à l'interface de support de traverse (202) de l'élément d'échafaudage (20) et la fermeture (41, 42) de la traverse d'échafaudage (1) étant raccordée à engagement positif à l'ouverture de fermeture (2011) de l'élément d'échafaudage (20), ces deux éléments de raccordement étant disposés de manière espacée l'un de l'autre, notamment espacée l'un de l'autre dans le sens longitudinal du manche (201).

11. Section d'échafaudage (100) selon l'une des revendications précédentes, **caractérisée en ce que** la tête (611) est introduite dans une zone intérieure creuse du manche (201) par endroits à travers l'ouverture de fermeture (2011) et la surface de contact (6111) de la tête (611) adhère au moins par endroits à l'intérieur du manche (201) à la paroi de ce dernier de manière avoisinante par rapport à l'ouverture de fermeture (2011) et lors du raccordement entre la fermeture (41, 42) et le manche (201) en état verrouillé, il y a un flux de force fermé en soi, qui s'étend de la tête (611) à travers la surface de contact (6111) de celle-ci vers la paroi du manche (201), de la paroi du manche (201) vers le boîtier (5) y adhérent, du boîtier (5) à travers la surface de serrage (521) de celui-ci et la surface de contact (72) vers l'élément de serrage (7), de l'élément de serrage (7) à travers la surface de clavette (71) de celui-ci et la surface d'angle (631) vers l'élément de raccordement (6) et à l'intérieur de l'élément de raccordement (6) pour retourner vers la tête (611).

12. Procédé pour monter une section d'échafaudage (100) selon l'une des revendications précédentes 10 ou 11, comprenant les étapes
A) transférer au moins l'une des fermetures (41, 42) de la traverse d'échafaudage (1) dans son état d'ouverture, le plan de tête (KE) étant orienté en parallèle vers le cantilever (31, 32).
B) raccorder une interface de raccordement (21) du support de traverse (2) à l'interface de support de traverse (202) de l'élément d'échafaudage (20),
C) transférer la fermeture (41, 42) de la traverse d'échafaudage (1) dans l'état de verrouillage, l'élément de raccordement (6) étant rapproché le long de l'axe de fermeture (VA) de manière linéaire à l'élément d'échafaudage (20) et la tête (611) traversant par endroits à travers l'ouverture de fermeture (2011) à l'intérieur du manche (201) et l'élément de raccordement (6) étant ensuite tourné autour de l'axe de fermeture (VA), jusqu'à ce que le plan de tête (KE) soit essentiellement orienté perpendiculairement par rapport au cantilever (31, 32) et l'élément de serrage (7) soit actionné par la suite, l'élément de raccordement (6) étant retiré de l'élément d'échafaudage (20) le long de l'axe de fermeture (VA) de manière linéaire jusqu'à ce que la surface de contact (6111) de la tête (611) adhère au moins par endroits à l'intérieur du manche (201) à la paroi de celui-ci.

13. Procédé selon la revendication 12, **caractérisé en ce que** l'élément de serrage (7) glisse dans l'étape C) du procédé le long de la surface de guidage (5231) de l'ouverture d'actionnement (52) du boitier (5), générant ainsi un mouvement de rotation de l'élément de raccordement (6) autour de l'axe de fermeture (VA) par un mouvement linéaire de l'élément de raccordement (6) et/ou de l'élément de serrage (7).
